(19) Europäisches Patentamt
European Patent Office
Office européen des brevets

(11) Veröffentlichungsnummer: **0 077 962**
**A1**

(12) **EUROPÄISCHE PATENTANMELDUNG**

(21) Anmeldenummer: 82109384.6

(22) Anmeldetag: 11.10.82

(51) Int. Cl.³: C 07 F 7/08
C 07 F 7/18, C 07 F 7/10
C 07 F 7/12, A 01 N 55/00

(30) Priorität: 22.10.81 DE 3141860

(43) Veröffentlichungstag der Anmeldung: 04.05.83 Patentblatt 83/18

(84) Benannte Vertragsstaaten: AT BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Förster, Heinz, Dr.
Am Eckbusch 47
D-5600 Wuppertal 1(DE)

(72) Erfinder: Eue, Ludwig, Dr.
Paul-Klee-Strasse 36
D-5090 Leverkusen 1(DE)

(72) Erfinder: Schmidt, Robert, Dr.
Im Waldwinkel 110
D-5060 Bergisch-Gladbach 2(DE)

(72) Erfinder: Lürssen, Klaus, Dr.
August-Kierspel-Strasse 139
D-5060 Bergisch-Gladbach 2(DE)

(54) **Trifluormethyl-phenoxy-phenyl-silicium-Derivate, Verfahren zu ihrer Herstellung und ihre Verwendung als Herbizide und Pflanzenwuchsregulatoren.**

(57) Neue Trifluormethyl-phenoxy-phenyl-silicium-Derivate der Formel

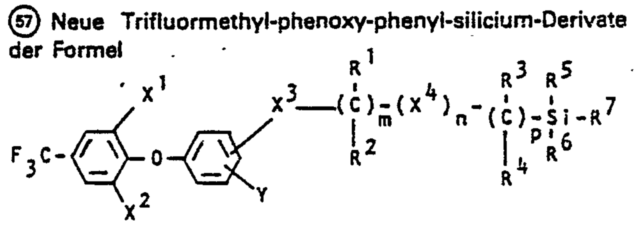

in welcher

$X^1$ und $X^2$ unabhängig voneinander für Wasserstoff, Fluor, Chlor, Brom oder Iod stehen,

Y für Wasserstoff, Halogen, Cyano oder Nitro steht,

n für die Zahlen 0 oder 1 steht,

m für die Zahlen 0, 1, 2 oder 3 steht,

p für die Zahlen 0, 1, 2 oder 3 steht,

$X^3$ und $X^4$ unabhängig voneinander für Sauerstoff oder die CO–O–Gruppe stehen,

$R^1$, $R^2$, $R^3$ und $R^4$ unabhängig voneinander für Wasserstoff oder $C_1$-$C_5$-Alkyl stehen,

$R^5$ und $R^6$ unabhängig voneinander für $C_1$-$C_5$-Alkyl stehen und

$R^7$ für $C_1$-$C_5$-Alkyl, Hydroxy, Chlor, Brom, Iod, für gegebenenfalls durch Fluor, Chlor, Brom, Iod, $C_1$-$C_5$Alkoxy und/oder $C_1$-$C_5$-Alkylthio substituiertes geradkettiges oder verzweigtes $C_1$-$C_5$-Alkoxy, $C_2$-$C_5$-Alkenoxy, $C_2$-$C_5$-Alkinoxy, $C_1$-$C_5$-Alkylthio, $C_2$-$C_5$-Alkenyl-thio, $C_2$-$C_5$-Alkinylthio oder für den Rest

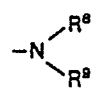

steht, worin

$R^8$ und $R^9$ unabhängig voneinander für gegebenenfalls durch Chlor, Brom und/oder Iod substituiertes Phenyl, geradkettiges oder verzweigtes $C_1$-$C_5$-Alkyl, $C_2$-$C_5$-Alkenyl oder $C_2$-$C_5$-Alkinyl stehen.

oder worin

$R^8$ und $R^9$ zusammen mit dem Stickstoffatom an das sie gebunden sind, für gegebenenfalls durch Methyl und/oder Ethyl substituiertes Pyrrolidyl, für gegebenenfalls durch Methyl substituiertes

./...

EP 0 077 962 A1

Morpholinyl, für Azacycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethyl-piperidyl stehen,

mehrere Verfahren zu deren Herstellung sowie die Verwendung der neuen Stoffe als Herbizide und Pflanzenwachstumsregulatoren.

0077962

BAYER AKTIENGESELLSCHAFT 5090 Leverkusen, Bayerwerk

Zentralbereich
Patente, Marken und Lizenzen 'Dü/ABc
Ib

Trifluormethyl-phenoxy-phenyl-silicium-Derivate, Verfahren zu ihrer Herstellung und ihre Verwendung als Herbizide und Pflanzenwuchsregulatoren

Die Erfindung betrifft neue Trifluormethyl-phenoxy-phenyl-silicium-Derivate, mehrere Verfahren zu ihrer Herstellung sowie ihre Verwendung als Herbizide und Pflanzenwachstumsregulatoren.

Es ist bereits bekannt, daß bestimmte substituierte Diphenylether zur Unkrautbekämpfung verwendet werden können (vergleiche DE - OS 2 311 638). So läßt sich zum Beispiel das 5-(2-Chlor-trifluormethyl-phenoxy)-2-nitro-benzoesäure-Natriumsalz zur Bekämpfung von Unkraut verwenden. Die herbizide Wirkung dieses Stoffes ist gut, jedoch ist die Selektivität nicht immer ausreichend.

Es wurden nun neue Trifluormethyl-phenoxy-phenyl-silicium-Derivate der Formel

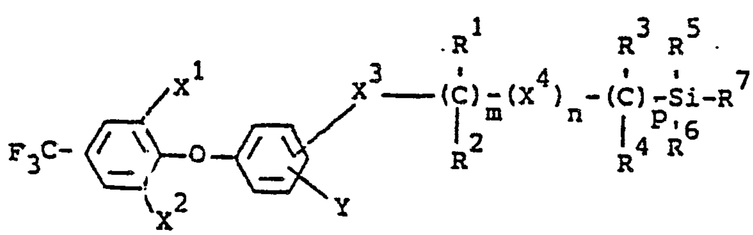

(I)

in welcher

$X^1$ und $X^2$ unabhängig voneinander für Wasserstoff, Fluor, Chlor, Brom oder Iod stehen,

Y für Wasserstoff, Halogen, Cyano oder Nitro steht,

n für die Zahlen 0 oder 1 steht,

m für die Zahlen 0, 1, 2 oder 3 steht,

p für die Zahlen 0, 1, 2 oder 3 steht,

$X^3$ und $X^4$ unabhängig voneinander für Sauerstoff oder die -CO-O-Gruppe stehen,

$R^1$, $R^2$, $R^3$ und $R^4$ unabhängig voneinander für Wasserstoff oder $C_1$-$C_5$-Alkyl stehen,

$R^5$ und $R^6$ unabhängig voneinander für $C_1$-$C_5$-Alkyl stehen, und

$R^7$ für $C_1$-$C_5$-Alkyl, Hydroxy, Chlor, Brom, Iod, für gegebenenfalls durch Fluor, Chlor, Brom, Iod, $C_1$-$C_5$-Alkoxy und/oder $C_1$-$C_5$-Alkylthio substituiertes geradkettiges oder verzweigtes $C_1$-$C_5$-Alkoxy, $C_2$-$C_5$-Alkenoxy, $C_2$-$C_5$-Alkinoxy, $C_1$-$C_5$-Alkylthio, $C_2$-$C_5$-Alkenyl-thio, $C_2$-$C_5$-Alkinyl-thio oder für den Rest

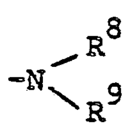

steht, worin

$R^8$ und $R^9$ unabhängig voneinander für gegebenenfalls durch Fluor, Chlor, Brom und/oder Iod substituiertes Phenyl, geradkettiges oder verzweigtes $C_1$-$C_5$-Alkyl, $C_2$-$C_5$-Alkenyl oder $C_2$-$C_5$-Alkinyl stehen,

oder worin

$R^8$ und $R^9$ zusammen mit dem Stickstoffatom an das sie gebunden sind, für gegebenenfalls durch Methyl und/oder Ethyl substituiertes Pyrrolidyl, für gegebenenfalls durch Methyl substituiertes Morpholinyl, für Azacycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethyl-piperidyl stehen,

gefunden.

Weiterhin wurde gefunden, daß man neue Trifluormethyl-phenoxy-phenyl-silicium-Derivate der Formel (I) erhält, wenn man

a) Diphenylether der Formel

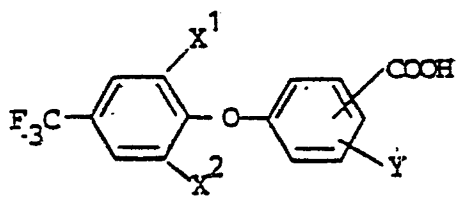

(II)

in welcher
$X^1$, $X^2$ und Y die oben angegebene Bedeutung haben,

mit Verbindungen der Formel

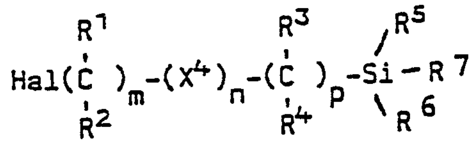

(III)

in welcher
$X^4$, $R^1$, $R^2$, $R^3$, $R^4$, $R^5$, $R^6$, $R^7$, m, n und p die oben angegebene Bedeutung haben und Hal für Chlor oder Brom steht,

gegebenenfalls in Gegenwart eines Säureakzeptors und gegebenenfalls in Gegenwart eines Verdünnungsmittels umsetzt,

oder

b) Diphenylether-Derivate der Formel

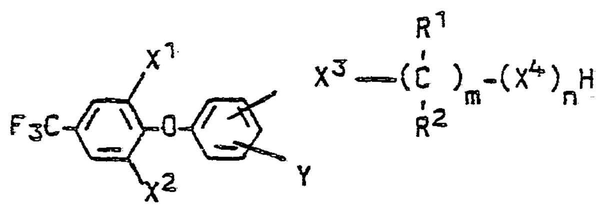

(IV)

in welcher
$X^1$, $X^2$, $X^3$, $X^4$, Y, $R^1$, $R^2$, m und n die oben angegebene Bedeutung haben,

mit Silicium-Derivaten der Formel

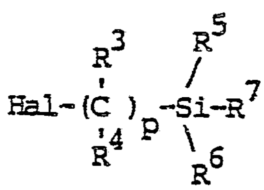

(V)

in welcher
$R^3$, $R^4$, $R^5$, $R^6$, $R^7$, p und Hal die oben angegebene Bedeutung haben,

gegebenenfalls in Gegenwart eines Säureakzeptors und gegebenenfalls in Gegenwart eines Verdünnungsmittels umsetzt,

oder

c) Trifluormethyl-phenoxy-phenyl-silicium-Derivate der Formel

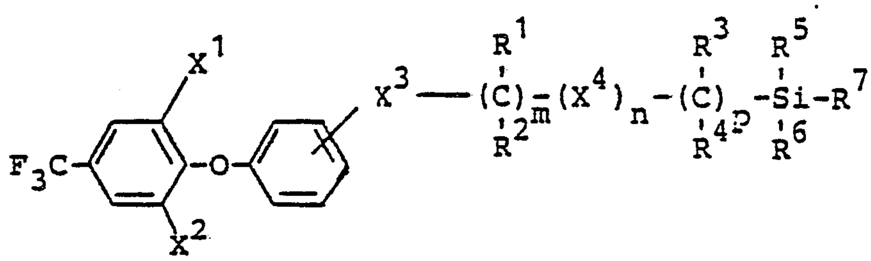

(Ia)

in welcher
$X^1$, $X^2$, $X^3$, $X^4$, $R^1$, $R^2$, $R^3$, $R^4$, $R^5$, $R^6$, $R^7$, m, n und p die oben angegebene Bedeutung haben,

mit Salpetersäure, gegebenenfalls in Gegenwart eines Katalysators sowie gegegebenenfalls in Gegenwart eines Verdünnungsmittels umsetzt,

oder

d) Trifluormethyl-phenoxy-phenyl-silicium-Derivate der Formel

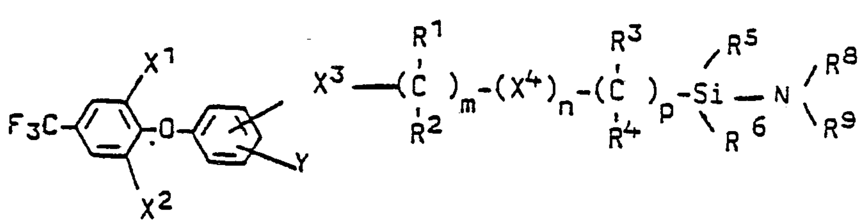

. (Ib)

in welcher
$X^1$, $X^2$, $X^3$, $X^4$, Y, $R^1$, $R^2$, $R^3$, $R^4$, $R^5$, $R^6$, $R^8$, $R^9$, m, n und p die oben angegebene Bedeutung haben,

mit Hydroxy-Verbindungen der Formel

$$HO-R^{10} \qquad (VI)$$

in welcher

$R^{10}$ für Wasserstoff, für gegebenenfalls durch Fluor, Chlor, Brom und/oder Iod substituiertes geradkettiges oder verzweigtes $C_1$-$C_5$-Alkyl, $C_2$-$C_5$-Alkenyl oder $C_2$-$C_5$-Alkinyl steht,

gegebenenfalls in Gegenwart eines Verdünnungsmittels umsetzt.

Schließlich wurde gefunden, daß sich die neuen Trifluormethylphenoxy-phenyl-Silicium-Derivate der Formel (I) durch hervorragende herbizide und pflanzenwuchsregulierende Eigenschaften auszeichen.

Überraschenderweise besitzen die erfindungsgemäßen Trifluormethyl-phenoxy-phenyl-silicium-Derivate der Formel (I) eine wesentlich bessere herbizide Wirksamkeit als das 5-(2-Chlor-4-trifluormethyl-phenoxy)-2-nitrobenzoesäure-Natriumsalz, welches ein konstitutionell ähnlicher, vorbekannter Wirkstoff gleicher Wirkungsrichtung ist. Darüber hinaus lassen sich die erfindungsgemäßen Stoffe entgegen den Erwartungen auch zur Regulierung des

Pflanzenwachstums einsetzen.

Die erfindungsgemäßen Trifluormethyl-phenoxy-phenyl-silicium-Derivate sind durch die Formel (I) definiert.

In dieser Formel stehen vorzugsweise

$X^1$ und $X^2$ unabhängig voneinander für Wasserstoff oder Chlor,

Y für Wasserstoff, Chlor, Cyano oder Nitro,

m für die Zahlen 0, 1, 2 oder 3,

n für die Zahlen 0 oder 1,

p für die Zahlen 0, 1, 2 oder 3,

$X^3$ für Sauerstoff oder die -CO-O-Gruppe,

$X^4$ für Sauerstoff oder die -CO-O-Gruppe,

$R^1$, $R^2$, $R^3$ und $R^4$ unabhängig voneinander für Wasserstoff, Methyl oder Ethyl,

$R^5$ und $R^6$ unabhängig voneinander für Methyl, Ethyl, n- und iso-Propyl, n-, iso-, sec.- und tert.-Butyl und

$R^7$ für Methyl, Ethyl, n- und iso-Propyl, n-, iso-, sec.- und tert.-Butyl, für Hydroxy, für Chlor, für gegebenenfalls durch Fluor, Chlor, Methoxy, Ethoxy, Methylthio und/oder Ethylthio substituiertes Methoxy, Ethoxy, n- und iso-Propoxy, n-, iso-, sec.- und tert.-Butoxy, Methylthio, Ethylthio, Propenoxy, Propinyloxy, Propenylthio, Propinylthio oder für den Rest

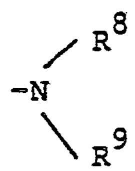 ,

worin

$R^8$ und $R^9$ unabhängig voneinander für gegebenenfalls durch Fluor und/oder Chlor substituiertes Phenyl, Methyl, Ethyl, n- und iso-Propyl, n-, iso-, sec.- und tert.-Butyl, 2-Propenyl, 2-Butenyl, 2-Propinyl und 2-Butinyl stehen,

oder worin

$R^8$ und $R^9$ zusammen mit dem Stickstoffatom an das sie gebunden sind, für gegebenenfalls durch Methyl und/oder Ethyl substituiertes Pyrrolidyl, für gegebenenfalls durch Methyl substituiertes Morpholinyl, für Aza-cycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethylpiperidyl stehen.

Als Beispiele für die erfindungsgemäße Stoffe der Formel

(I) seien im einzelnen die in der folgenden Tabelle 1 formelmäßig aufgeführten Stoffe genannt.

Tabelle 1

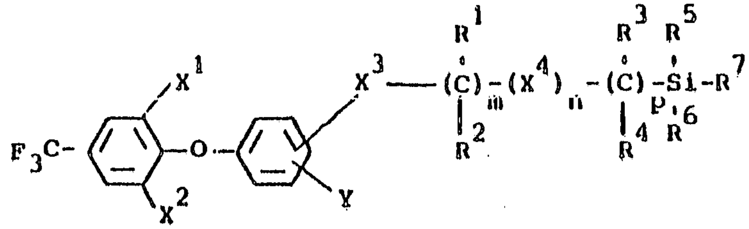

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| H | H | $3\text{-}CO_2\text{-}$ | | $4\text{-}NO_2$ | H | H | | | $CH_3$ | $CH_3$ | $CH_3$ | 1 | 0 | 0 |
| H | H | $3\text{-}CO_2\text{-}$ | | $4\text{-}NO_2$ | H | H | | | $CH_3$ | $CH_3$ | $-N(CH_3)_2$ | 1 | 0 | 0 |
| H | Cl | $3\text{-}CO_2\text{-}$ | | $4\text{-}NO_2$ | H | H | | | $CH_3$ | $CH_3$ | $-N(CH_3)_2$ | 1 | 0 | 0 |
| Cl | Cl | $3\text{-}CO_2\text{-}$ | | $4\text{-}NO_2$ | H | H | | | $CH_3$ | $CH_3$ | $-N(CH_3)_2$ | 1 | 0 | 0 |
| Cl | H | $3\text{-}CO_2\text{-}$ | | $4\text{-}NO_2$ | H | H | | | $CH_3$ | $CH_3$ | 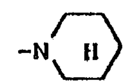 | 1 | 0 | 0 |
| Cl | H | $3\text{-}CO_2\text{-}$ | | $4\text{-}NO_2$ | H | H | | | $CH_3$ | $CH_3$ | 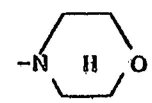 | 1 | 0 | 0 |
| Cl | H | $3\text{-}CO_2\text{-}$ | | $4\text{-}NO_2$ | H | H | | | $CH_3$ | $CH_3$ | 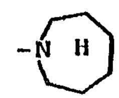 | 1 | 0 | 0 |
| Cl | H | $3\text{-}CO_2\text{-}$ | | $4\text{-}NO_2$ | H | H | | | $CH_3$ | $CH_3$ | $-N(CH_2\text{-}CH{=}CH_2)_2$ | 1 | 0 | 0 |
| Cl | H | $3\text{-}CO_2\text{-}$ | | $4\text{-}NO_2$ | H | H | | | $CH_3$ | $CH_3$ | -OH | 1 | 0 | 0 |
| H | H | $3\text{-}CO_2\text{-}$ | | $4\text{-}NO_2$ | H | H | | | $CH_3$ | $CH_3$ | -OH | 1 | 0 | 0 |
| Cl | Cl | $3\text{-}CO_2\text{-}$ | | $4\text{-}NO_2$ | H | H | | | $CH_3$ | $CH_3$ | -OH | 1 | 0 | 0 |
| Cl | Cl | $3\text{-}CO_2\text{-}$ | | $4\text{-}NO_2$ | H | H | | | $CH_3$ | $CH_3$ | $-OCH_3$ | 1 | 0 | 0 |
| H | Cl | $3\text{-}CO_2$ | | $4\text{-}NO_2$ | H | H | | | $CH_3$ | $CH_3$ | $-OCH_3$ | 1 | 0 | 0 |

Tabelle 1 (Fortsetzung)

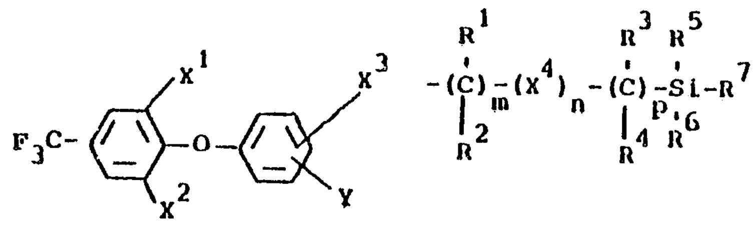

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| H | H | $3-CO_2-$ | | $4-NO_2$ | H | H | | | $CH_3$ | $CH_3$ | $-OCH_3$ | 1 | 0 | 0 |
| H | H | $3-CO_2-$ | | $4-NO_2$ | H | H | | | $CH_3$ | $CH_3$ | $-OC_3H_7$-iso | 1 | 0 | 0 |
| H | Cl | $3-CO_2-$ | | $4-NO_2$ | H | H | | | $CH_3$ | $CH_3$ | $-OC_3H_7$-iso | 1 | 0 | 0 |
| Cl | Cl | $3-CO_2-$ | | $4-NO_2$ | H | H | | | $CH_3$ | $CH_3$ | $-OC_3H_7$-iso | 1 | 0 | 0 |
| Cl | H | $3-CO_2-$ | | $4-NO_2$ | H | H | | | $CH_3$ | $CH_3$ | $-OC_2H_5$ | 1 | 0 | 0 |
| Cl | H | $3-CO_2-$ | | $4-NO_2$ | H | H | | | $CH_3$ | $CH_3$ | $-OCH_2CF_3$ | 1 | 0 | 0 |
| Cl | H | $3-CO_2-$ | | $4-NO_2$ | H | H | | | $CH_3$ | $CH_3$ | $-OC_4H_9$-n | 1 | 0 | 0 |
| Cl | H | $3-CO_2-$ | | $4-NO_2$ | H | H | | | $CH_3$ | $CH_3$ | 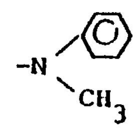 | 1 | 0 | 0 |
| Cl | H | 3-O | $-CO_2-$ | $4-NO_2$ | $CH_3$ | H | H | H | $CH_3$ | $CH_3$ | 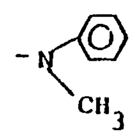 | 1 | 1 | 1 |
| Cl | H | 3-O | $-CO_2-$ | $4-NO_2$ | $CH_3$ | H | H | H | $CH_3$ | $CH_3$ | $CH_3$ | 1 | 1 | 1 |
| H | H | 3-O | $-CO_2-$ | $4-NO_2$ | $CH_3$ | H | H | H | $CH_3$ | $CH_3$ | $CH_3$ | 1 | 1 | 1 |
| H | H | 3-O | $-CO_2-$ | $4-NO_2$ | $CH_3$ | H | H | H | $CH_3$ | $CH_3$ | $-N(CH_3)_2$ | 1 | 1 | 1 |
| H | Cl | 3-O | $-CO_2-$ | $4-NO_2$ | $CH_3$ | H | H | H | $CH_3$ | $CH_3$ | $-N(CH_3)_2$ | 1 | 1 | 1 |
| Cl | Cl | 3-O | $-CO_2-$ | $4-NO_2$ | $CH_3$ | H | H | H | $CH_3$ | $CH_3$ | $-N(CH_3)_2$ | 1 | 1 | 1 |

Tabelle 1 (Fortsetzung)

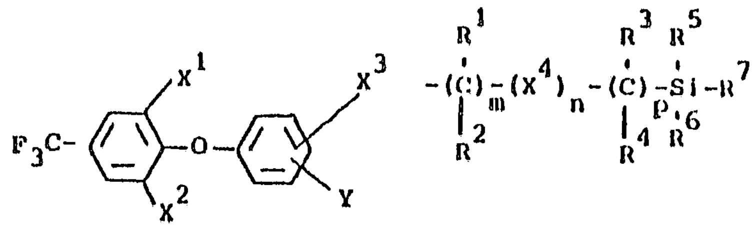

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| Cl | H | 3-O- | $CO_2$- | 4-$NO_2$ | $CH_3$ | H | H | H | $CH_3$ | $CH_3$ | 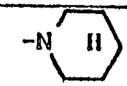 | 1 | 1 | 1 |
| Cl | H | 3-O- | -$CO_2$- | 4-$NO_2$ | $CH_3$ | H | H | H | $CH_3$ | $CH_3$ | 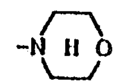 | 1 | 1 | 1 |
| Cl | H | 3-O- | -$CO_2$- | 4-$NO_2$ | $CH_3$ | H | H | H | $CH_3$ | $CH_3$ | 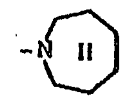 | 1 | 1 | 1 |
| Cl | H | 3-O- | -$CO_2$- | 4-$NO_2$ | $CH_3$ | H | H | H | $CH_3$ | $CH_3$ | $-N(CH_2-CH=CH_2)_2$ | 1 | 1 | 1 |
| Cl | H | 3-O- | -$CO_2$- | 4-$NO_2$ | $CH_3$ | H | H | H | $CH_3$ | $CH_3$ | -OH | 1 | 1 | 1 |
| H | H | 3-O- | -$CO_2$- | 4-$NO_2$ | $CH_3$ | H | H | H | $CH_3$ | $CH_3$ | -OH | 1 | 1 | 1 |
| Cl | Cl | 3-O- | -$CO_2$- | 4-$NO_2$ | $CH_3$ | H | H | H | $CH_3$ | $CH_3$ | -OH | 1 | 1 | 1 |
| Cl | H | 3-O- | -$CO_2$- | 4-$NO_2$ | $CH_3$ | H | H | H | $CH_3$ | $CH_3$ | $-OCH_3$ | 1 | 1 | 1 |
| H | H | 3-O- | -$CO_2$- | 4-$NO_2$ | $CH_3$ | H | H | H | $CH_3$ | $CH_3$ | $-OCH_3$ | 1 | 1 | 1 |
| Cl | Cl | 3-O- | -$CO_2$- | 4-$NO_2$ | $CH_3$ | H | H | H | $CH_3$ | $CH_3$ | $-OCH_3$ | 1 | 1 | 1 |
| Cl | H | 3-O- | -$CO_2$ | 4-$NO_2$ | $CH_3$ | H | H | H | $CH_3$ | $CH_3$ | $-OCH_2CF_3$ | 1 | 1 | 1 |
| Cl | H | 3-O- | -$CO_2$- | 4-$NO_2$ | $CH_3$ | H | H | H | $CH_3$ | $CH_3$ | $-OC_2H_5$ | 1 | 1 | 1 |
| Cl | Cl | 3-O- | -$CO_2$- | 4-$NO_2$ | $CH_3$ | H | H | H | $CH_3$ | $CH_3$ | $-OC_3H_7$-iso | 1 | 1 | 1 |
| H | Cl | 3-O- | -$CO_2$ | 4-$NO_2$ | $CH_3$ | H | H | H | $CH_3$ | $CH_3$ | $-OC_3H_7$-iso | 1 | 1 | 1 |

Tabelle 1 (Fortsetzung)

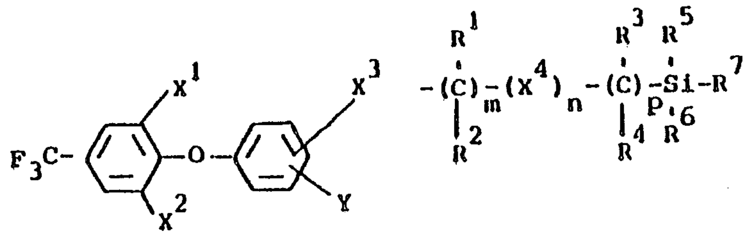

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| H | H | 3-O | $-CO_2-$ | $4-NO_2$ | $CH_3$ | H | H | H | $CH_3$ | $CH_3$ | $-OC_3H_7-iso$ | 1 | 1 | 1 |
| Cl | H | 3-O | $-CO_2-$ | $4-NO_2$ | $CH_3-$ | H | H | H | $CH_3$ | $CH_3$ | $-OC_4H_9-n$ | 1 | 1 | 1 |
| H | H | 3-O | | $4-NO_2$ | H | H | | | $CH_3$ | $CH_3$ | $-CH_3$ | 1 | 0 | 0 |
| H | H | 3-O | | $4-NO_2$ | H | H | | | $CH_3$ | $CH_3$ | $-N(CH_3)_2$ | 1 | 0 | 0 |
| H | Cl | 3-O | | $4-NO_2$ | H | H | | | $CH_3$ | $CH_3$ | $-N(CH_3)_2$ | 1 | 0 | 0 |
| Cl | Cl | 3-O | | $4-NO_2$ | H | H | | | $CH_3$ | $CH_3$ | $-N(CH_3)_2$ | 1 | 0 | 0 |
| Cl | H | 3-O | | $4-NO_2$ | H | H | | | $CH_3$ | $CH_3$ | 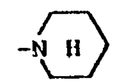 | 1 | 0 | 0 |
| Cl | H | 3-O | | $4-NO_2$ | H | H | | | $CH_3$ | $CH_3$ | 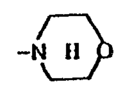 | 1 | 0 | 0 |
| Cl | H | 3-O | | $4-NO_2$ | H | H | | | $CH_3$ | $CH_3$ | 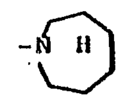 | 1 | 0 | 0 |
| Cl | H | 3-O | | $4-NO_2$ | H | H | | | $CH_3$ | $CH_3$ | $-N(CH_2-CH=CH_2)_2$ | 1 | 0 | 0 |
| Cl | H | 3-O | | $4-NO_2$ | H | H | | | $CH_3$ | $CH_3$ | 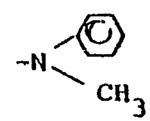 | 1 | 0 | 0 |
| Cl | H | 3-O | | $4-NO_2$ | H | H | | | $CH_3$ | $CH_3$ | -OH | 1 | 0 | 0 |
| Cl | Cl | 3-O | | $4-NO_2$ | H | H | | | $CH_3$ | $CH_3$ | -OH | 1 | 0 | 0 |
| H | H | 3-O | | $4-NO_2$ | H | H | | | $CH_3$ | $CH_3$ | -OH | 1 | 0 | 0 |

Tabelle 1 (Fortsetzung)

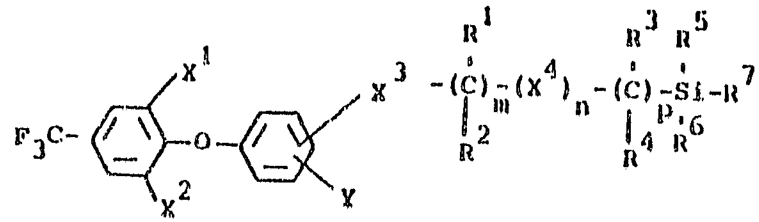

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| H | H | 3-O | | $4-NO_2$ | H | H | | | $CH_3$ | $CH_3$ | $-OCH_3$ | 1 | 0 | 0 |
| H | Cl | 3-O | | $4-NO_2$ | H | H | | | $CH_3$ | $CH_3$ | $-OCH_3$ | 1 | 0 | 0 |
| Cl | Cl | 3-O | | $4-NO_2$ | H | H | | | $CH_3$ | $CH_3$ | $-OCH_3$ | 1 | 0 | 0 |
| Cl | H | 3-O | | $4-NO_2$ | H | H | | | $CH_3$ | $CH_3$ | $-OC_2H_5$ | 1 | 0 | 0 |
| Cl | H | 3-O | | $4-NO_2$ | H | H | | | $CH_3$ | $CH_3$ | $-OCH_2CF_3$ | 1 | 0 | 0 |
| Cl | H | 3-O | | $4-NO_2$ | H | H | | | $CH_3$ | $CH_3$ | $-OC_3H_7$-iso | 1 | 0 | 0 |
| Cl | Cl | 3-O | | $4-NO_2$ | H | H | | | $CH_3$ | $CH_3$ | $-OC_3H_7$-iso | 1 | 0 | 0 |
| H | H | 3-O | | $4-NO_2$ | H | H | | | $CH_3$ | $CH_3$ | $-OC_3H_7$-iso | 1 | 0 | 0 |
| Cl | H | 3-O | | $4-NO_2$ | H | H | | | $CH_3$ | $CH_3$ | $-OC_4H_9$-n | 1 | 0 | 0 |
| Cl | H | $4-CO_2-$ | | H | H | H | | | $CH_3$ | $CH_3$ | $CH_3$ | 1 | 0 | 0 |
| Cl | Cl | $3-CO_2-$ | | H | H | H | | | $CH_3$ | $CH_3$ | $CH_3$ | 1 | 0 | 0 |
| Cl | Cl | $4-CO_2-$ | | H | H | H | | | $CH_3$ | $CH_3$ | $CH_3$ | 1 | 0 | 0 |
| Cl | H | $3-CO_2-$ | | H | H | H | | | $CH_3$ | $CH_3$ | $CH_3$ | 1 | 0 | 0 |

Tabelle 1 (Fortsetzung)

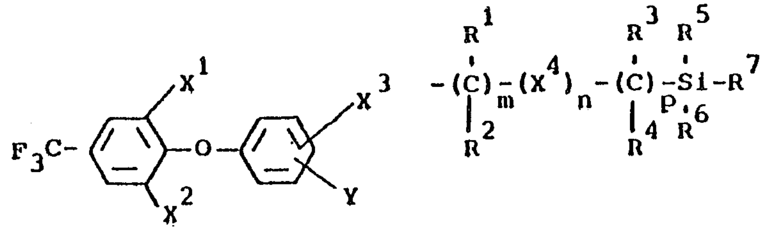

(I)

| $X^1$ | $X^2$ | $X^3$ | $X^4$ | Y | $R^1$ | $R^2$ | $R^3$ | $R^4$ | $R^5$ | $R^6$ | $R^7$ | m | n | p |
|---|---|---|---|---|---|---|---|---|---|---|---|---|---|---|
| Cl | H | 3-O | | H | H | H | | | $CH_3$ | $CH_3$ | $CH_3$ | 1 | 0 | 0 |
| Cl | H | 4-O | | H | H | H | | | $CH_3$ | $CH_3$ | $CH_3$ | 1 | 0 | 0 |
| Cl | Cl | 3-O | $-CO_2-$ | H | $CH_3$ | H | H | H | $CH_3$ | $CH_3$ | $CH_3$ | 1 | 1 | 1 |
| Cl | Cl | 4-O | $-CO_2-$ | H | $CH_3$ | H | H | H | $CH_3$ | $CH_3$ | $CH_3$ | 1 | 1 | 1 |
| Cl | Cl | 3-O | | H | H | H | | | $CH_3$ | $CH_3$ | $CH_3$ | 1 | 0 | 0 |
| Cl | Cl | 4-O | | H | H | H | | | $CH_3$ | $CH_3$ | $CH_3$ | 1 | 0 | 0 |

Verwendet man 5-(2,6-Dichlor-4-trifluormethyl-phenoxy)-2-nitrobenzoesäure und Chlormethyltrimethylsilan als Ausgangsstoffe, so kann der Verlauf des erfindungsgemäßen Verfahrens (a) durch das folgende Formelschema wiedergegeben werden:

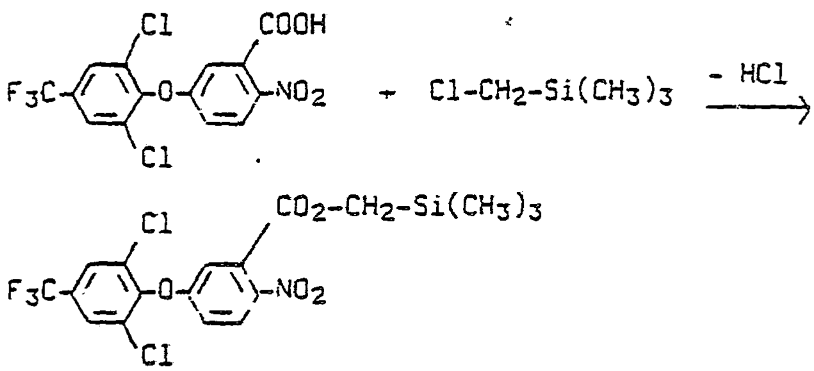


Verwendet man 2-(5-(2-Chlor-4-trifluormethyl-phenoxy)-2-nitrophenoxy)-essigsäure und Chlormethyl-trimethyl-silan als Ausgangsstoffe, so kann der Verlauf des erfindungsgemäßen Verfahrens (b) durch das folgende Formelschema wiedergegeben werden:

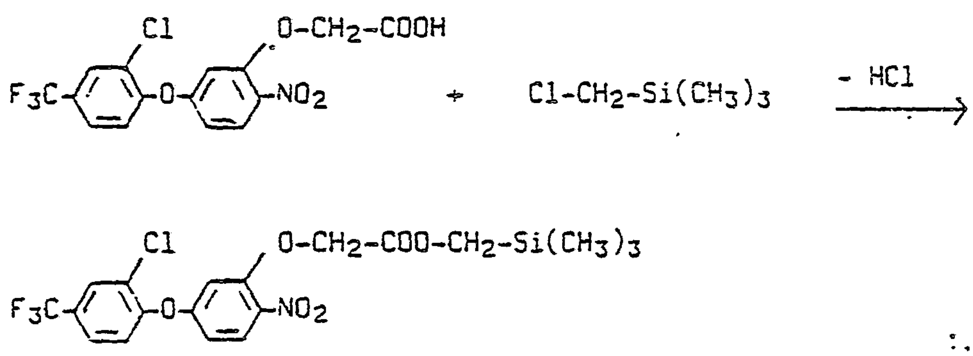


Verwendet man 2-(5-(2-Chlor-4-trifluormethyl-phenoxy)-2-nitrophenoxy)-essigsäure-trimethylsilyl-methylester und Salpetersäure

als Ausgangsstoffe, so kann der Verlauf des erfindungsgemäßen Verfahrens (c) durch das folgende Formelschema wiedergegeben werden:

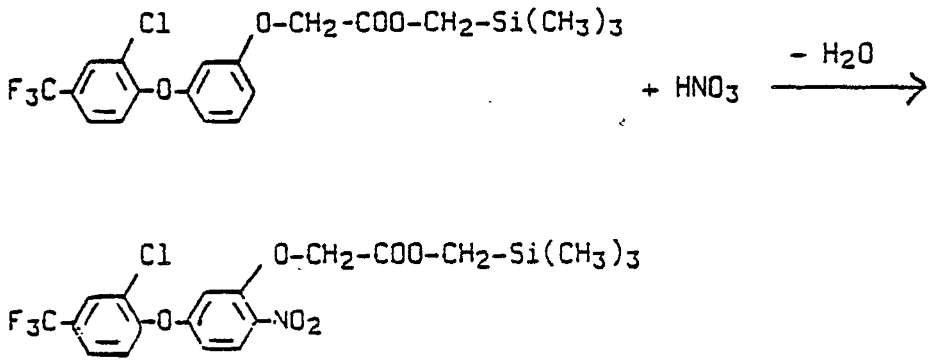


Verwendet man 5-(2-Chlor-4-trifluormethyl-phenoxy)-2-nitro-benzoesäure-(dimethylamino-dimethyl-silyl-methyl)-ester und Methanol als Ausgangsstoffe, so kann der Verlauf des erfindungsgemäßen Verfahrens (d) durch das folgende Formelschema wiedergegeben werden:

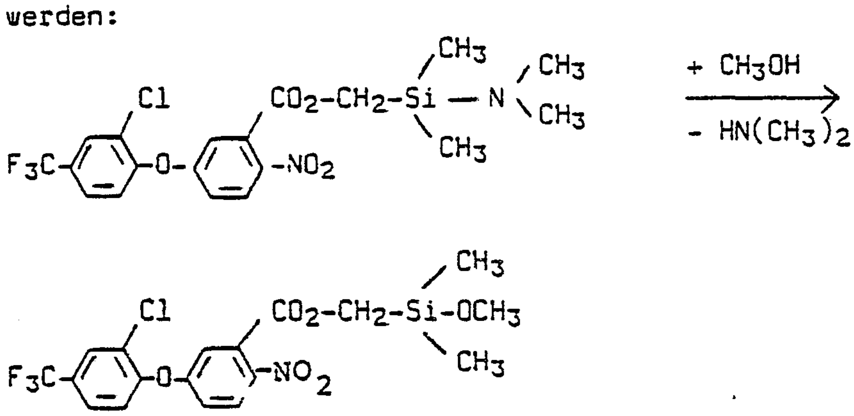


Die bei der Durchführung des erfindungsgemäßen Verfahrens (a) als Ausgangsstoffe benötigten Diphenylether sind durch die Formel (II) definiert. In dieser Formel haben $X^1$, $X^2$ und Y diejenigen Bedeutungen, die bereits im Zusammenhang mit der Beschreibung der erfindungsgemäßen Stoffe der Formel (I) für diese Reste genannt wurden.

Als Beispiele seien die 5-(2-Chlor-4-trifluormethyl-phenoxy)- und die 5-(2,6-Dichlor-4-trifluormethyl-phenoxy)-Derivate von 2-Nitro-benzoesäure, 2-Cyano-benzoesäure, 2-Chlor-benzoesäure und Benzoesäure genannt.

Die Verbindungen der Formel (II) sind bereits bekannt oder lassen sich nach üblichen Methoden in einfacher Weise herstellen (vergleiche DE-OS 2 311 638, GB-PS 2 058 055 und US-PS 4 031 131).

Die weiterhin bei dem erfindungsgemäßen Verfahren (a) als Ausgangsstoffe benötigten Verbindungen sind durch die Formel (III) definiert. In dieser Formel haben $R^1$, $R^2$, $R^3$, $R^4$, $R^5$, $R^6$, $R^7$, $X^4$, m, n und p diejenigen Bedeutungen, die bereits im Zusammenhang mit der Beschreibung der erfindungsgemäßen Stoffe der Formel (I) für diese Reste bzw. Indices genannt wurden. Hal steht für Chlor oder Brom.

Als Beispiele für Verbindungen der Formel (III) seien im einzelnen genannt:

<u>Tabelle 2:</u>

$$Hal(\overset{R^1}{\underset{R^2}{C}})_m-(X^4)_n-(\overset{R^3}{\underset{R^4}{C}})_p-Si\begin{matrix} R^5 \\ -R^6 \\ R^7 \end{matrix} \qquad (III)$$

Hal = Chlor oder Brom

| $R^1$ | $R^2$ | $R^3$ | $R^4$ | $R^5$ | $R^7$ | $R^6$ | m | n | p | $X^4$ |
|---|---|---|---|---|---|---|---|---|---|---|
| | | H | H | $CH_3$ | $CH_3$ | $CH_3$ | 0 | 0 | 1 | |
| H | $CH_3$ | H | H | $CH_3$ | $CH_3$ | $CH_3$ | 1 | 1 | 1 | $CO_2$ |
| | | H | H | $CH_3$ | $N(CH_3)_2$ | $CH_3$ | 0 | 0 | 1 | |
| | | H | H | $CH_3$ | 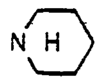 | $CH_3$ | 0 | 0 | 1 | |
| | | H | H | $CH_3$ | 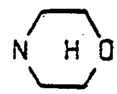 | $CH_3$ | 0 | 0 | 1 | |
| | | H | H | $CH_3$ | 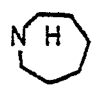 | $CH_3$ | 0 | 0 | 1 | |
| | | H | H | $CH_3$ | OH | $CH_3$ | 0 | 0 | 1 | |
| | | H | H | $CH_3$ | $OCH_3$ | $CH_3$ | 0 | 0 | 1 | |
| | | H | H | $CH_3$ | $OCH_2CF_3$ | $CH_3$ | 0 | 0 | 1 | |
| | | H | H | $CH_3$ | $OC_3H_7$-iso | $CH_3$ | 0 | 0 | 1 | |
| | | H | H | $CH_3$ | $OC_4H_9$-n | $CH_3$ | 0 | 0 | 1 | |
| H | $CH_3$ | H | H | $CH_3$ | $N(CH_3)_2$ | $CH_3$ | 1 | 1 | 1 | $CO_2$ |
| H | $CH_3$ | H | H | $CH_3$ | 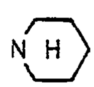 | $CH_3$ | 1 | 1 | 1 | $CO_2$ |
| H | $CH_3$ | H | H | $CH_3$ | 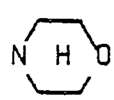 | $CH_3$ | 1 | 1 | 1 | $CO_2$ |
| H | $CH_3$ | H | H | $CH_3$ | 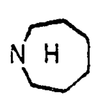 | $CH_3$ | 1 | 1 | 1 | $CO_2$ |

| $R^1$ | $R^2$ | $R^3$ | $R^4$ | $R^5$ | $R^7$ | $R^6$ | m | n | p | $X^4$ |
|---|---|---|---|---|---|---|---|---|---|---|
| | | H | H | $CH_3$ | $N(CH_2-CH=CH_2)_2$ | $CH_3$ | 0 | 0 | 1 | |
| H | $CH_3$ | H | H | $CH_3$ | $N(CH_2-CH=CH_2)_2$ | $CH_3$ | 1 | 1 | 1 | $CO_2$ |
| H | $CH_3$ | H | H | $CH_3$ | OH | $CH_3$ | 1 | 1 | 1 | $CO_2$ |
| H | $CH_3$ | H | H | $CH_3$ | $OCH_3$ | $CH_3$ | 1 | 1 | 1 | $CO_2$ |
| H | $CH_3$ | H | H | $CH_3$ | $OCH_2CF_3$ | $CH_3$ | 1 | 1 | 1 | $CO_2$ |
| H | $CH_3$ | H | H | $CH_3$ | $OC_3H_7$-iso | $CH_3$ | 1 | 1 | 1 | $CO_2$ |
| H | $CH_3$ | H | H | $CH_3$ | $OC_4H_9$-n | $CH_3$ | 1 | 1 | 1 | $CO_2$ |
| | | H | H | $CH_3$ | $OC_2H_5$ | $CH_3$ | 0 | 0 | 1 | |
| H | $CH_3$ | H | H | $CH_3$ | $OC_2H_5$ | $CH_3$ | 1 | 1 | 1 | $CO_2$ |
| H | $CH_3$ | H | H | $CH_3$ | 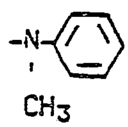 | $CH_3$ | 1 | 1 | 1 | $CO_2$ |

Die Verbindungen der Formel (III) sind bekannt oder lassen sich nach üblichen Methoden in einfacher Weise herstellen (vergleiche Houben-Weyl, Band 13/5, S. 39 ff, Georg Thieme-Verlag, Stuttgart - New York). Danach erfolgt die Herstellung von 2-Brompropionsäure-trimethyl-silyl-methylester durch Umsetzung von 2-Brom-propionsäure und Iod-trimethylsilyl-methan in Gegenwart von Verdünnungsmitteln wie z.B. Aceton und in Gegenwart von Basen wie z.B. Di-aza-bicycloundecen bei der Siedetemperatur des Lösungsmittels.

Bei der Durchführung des erfindungsgemäßen Verfahrens (a) arbeitet man vorzugsweise in Gegenwart eines Säureakzeptors. Als solche können alle üblichen Säurebindemittel Verwendung finden. Vorzugsweise in Frage kommen Alkali-hydroxide, wie z.B. Natrium- und Kaliumhydroxid, Alkalicarbonate und -alkoholate,wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin, Pyridin, Diazabicyclooctan, Diazabicyclononen und Diazabicycloundecen.

Als Verdünnungsmittel können bei der Durchführung des erfindungsgemäßen Verfahrens (a) praktisch alle inerten organischen Solventien verwendet werden. Vorzugsweise in Betracht kommen aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, ferner Ether, wie Diethylether und Dibutylether, Glycoldimethylether und Diglycoldimethylether, Tetrahydrofuran und Dioxan, außerdem Ketone, wie Aceton, Methyl-ethyl-, Methyl-isopropyl- und Methyl-isobutylketon, Ester, wie Essigsäure-methylester und -ethylester, weiterhin Nitrile, wie z.B. Acetonitril und Propionitril, darüber hinaus Amide, wie z.B. Dimethylformamid,

Dimethylacetamid und N-Methyl-pyrrolidon, sowie stark polare Solventien wie Dimethylsulfoxid, Tetramethylensulfon und Hexamethylphosphorsäuretriamid.

Die Reaktionstemperaturen können bei der Durchführung des erfindungsgemäßen Verfahrens (a) innerhalb eines größeren Bereichs variiert werden. Im allgemeinen arbeitet man bei Temperaturen zwischen -2o und +15o°C, vorzugsweise zwischen -1o und +12o°C.

Das erfindungsgemäße Verfahren (a) wird im allgemeinen bei Normaldruck ausgeführt.

Bei der Durchführung des erfindungsgemäßen Verfahrens (a) werden die Ausgangsstoffe der Formeln (II) und (III) im allgemeinen in etwa äquimolaren Mengen eingesetzt. Ein Überschuß der einen oder anderen Komponente ist möglich. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Die Aufarbeitung erfolgt nach üblichen Methoden. Im allgemeinen verfährt man in der Weise, daß man nach beendeter Umsetzung ein organisches Lösungsmittel, z.B. Toluol, zugibt und die organische Phase wie üblich wäscht, trocknet und durch Abdestillieren des Lösungsmittels einengt.

Die neuen Verbindungen fallen zum Teil in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zur Charakterisierung der neuen Substanzen dient der Brechungsindex. Soweit die neuen Produkte in fester Form anfallen, können sie durch Umkristallisation gereinigt werden. Zur Charakterisierung dient dann der Schmelzpunkt.

Die bei dem erfindungsgemäßen Verfahren (b) als Ausgangsstoffe benötigten Diphenylether-Derivate sind durch die Formel (IV) definiert. In dieser Formel haben $X^1$, $X^2$, $X^3$, $X^4$, Y, $R^1$, $R^2$, m und n diejenigen Bedeutungen, die bereits im Zusammenhang mit der Beschreibung der erfindungsgemäßen Stoffe der Formel (I) für diese Reste bzw. Indices genannt wurden.

Als Beispiele für Verbindungen der Formel (IV) seien im einzelnen genannt:

Tabelle 3:

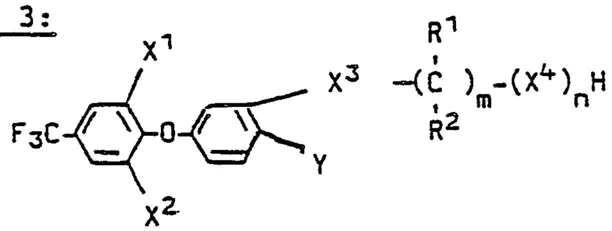

(IV)

| $X^1$ | $X^2$ | $X^3$ | $X^4$ | Y | $R^1$ | $R^2$ | m | n |
|---|---|---|---|---|---|---|---|---|
| Cl | Cl | O | $CO_2$ | $NO_2$ | H | $CH_3$ | 1 | 1 |
| H | Cl | O | $CO_2$ | $NO_2$ | H | $CH_3$ | 1 | 1 |

Tabelle 3 (Fortsetzung)

| $X^1$ | $X^2$ | $X^3$ | $X^4$ | Y | $R^1$ | $R^2$ | m | n |
|---|---|---|---|---|---|---|---|---|
| H | Cl | $CO_2$ | | $NO_2$ | | | 0 | 0 |
| Cl | Cl | $CO_2$ | | $NO_2$ | | | 0 | 0 |
| Cl | Cl | $CO_2$ | | H | | | 0 | 0 |
| H | Cl | $CO_2$ | | H | | | 0 | 0 |
| H | Cl | O | $CO_2$ | H | H | $CH_3$ | 1 | 1 |
| Cl | Cl | O | $CO_2$ | H | H | $CH_3$ | 1 | 1 |
| Cl | H | O | | $NO_2$ | | | 0 | 0 |
| Cl | Cl | O | | $NO_2$ | | | 0 | 0 |
| Cl | H | O | | H | | | 0 | 0 |
| Cl | Cl | O | | H | | | 0 | 0 |

Die Verbindungen der Formel (IV) sind bekannt oder lassen sich nach üblichen Methoden in einfacher Weise herstellen (vergleiche DE-AS 2 3o4 oo6, EP-OS 28 277 und GB-PS 2 058 055).

Die weiterhin bei dem erfindungsgemäßen Verfahren (b) als Ausgangsstoffe benötigten Verbindungen sind durch die Formel (V) definiert. In dieser Formel haben $R^3$, $R^4$, $R^5$, $R^6$, $R^7$ und p diejenigen Bedeutungen, die bereits im Zusammenhang mit der Beschreibung der erfindungsgemäßen Stoffe der Formel (I) für diese Reste bzw. Indices genannt wurden. Hal steht für Chlor oder Brom.

Als Beispiele für Verbindungen der Formel (V) seien im einzelnen genannt:

Tabelle 4:

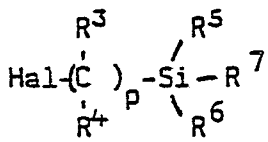

(V)

| $R^3$ | $R^4$ | $R^5$ | $R^7$ | $R^6$ | p | Hal |
|---|---|---|---|---|---|---|
| H | H | $CH_3$ | $CH_3$ | $CH_3$ | 1 | Cl (Br) |
| H | H | $CH_3$ | $N(CH_3)_2$ | $CH_3$ | 1 | Cl (Br) |
| H | H | $CH_3$ | 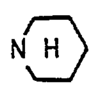 | $CH_3$ | 1 | Cl (Br) |
| H | H | $CH_3$ | 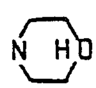 | $CH_3$ | 1 | Cl (Br) |
| H | H | $CH_3$ | 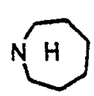 | $CH_3$ | 1 | Cl (Br) |

Tabelle 4 (Fortsetzung)

| $R^3$ | $R^4$ | $R^5$ | $R^7$ | $R^6$ | p | Hal |
|---|---|---|---|---|---|---|
| H | H | $CH_3$ | OH | $CH_3$ | 1 | Cl (Br) |
| H | H | $CH_3$ | $OCH_3$ | $CH_3$ | 1 | Cl (Br) |
| H | H | $CH_3$ | $OCH_2CF_3$ | $CH_3$ | 1 | Cl (Br) |
| H | H | $CH_3$ | $OC_3H_7$-iso | $CH_3$ | 1 | Cl (Br) |
| H | H | $CH_3$ | $OC_4H_9$-n | $CH_3$ | 1 | Cl (Br) |
| H | H | $CH_3$ | $OC_2H_5$ | $CH_3$ | 1 | Cl (Br) |
| H | H | $CH_3$ | $N(CH_2-CH=CH_2)_2$ | $CH_3$ | 1 | Cl (Br) |
| H | H | $CH_3$ | 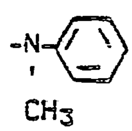 | $CH_3$ | 1 | Cl (Br) |

Die Verbindungen der Formel (V) sind bekannt oder lassen sich nach üblichen Methoden in einfacher Weise herstellen (vergleiche Houben-Weyl, Band 13/5, S. 39 ff, Georg Thieme Verlag, Stuttgart-New York).

Als Säureakzeptoren können bei dem erfindungsgemäßen Verfahren (b) alle üblichen Säurebindemittel verwendet werden. Vorzugsweise in Frage kommen alle diejenigen Säurebinder, die im Zusammenhang mit der Beschreibung des erfindungsgemäßen Verfahrens (a) genannt wurden.

Als Verdünnungsmittel können bei der Durchführung des erfindungsgemäßen Verfahrens (b) praktisch alle inerten organischen Solventien verwendet werden. Vorzugsweise in Betracht kommen diejenigen Verdünnungsmittel, die im Zusammenhang mit der Beschreibung des erfindungsgemäßen Verfahrens (a) genannt wurden.

Die Reaktionstemperaturen können bei der Durchführung des erfindungsgemäßen Verfahrens (b) innerhalb eines größeren Bereichs variiert werden. Im allgemeinen arbeitet man bei Temperaturen zwischen -2o und +12o°C, vorzugsweise zwischen -1o und +8o°C.

Das erfindungsgemäße Verfahren (b) wird im allgemeinen bei Normaldruck ausgeführt.

Bei der Durchführung des erfindungsgemäßen Verfahrens (b) werden die Ausgangsstoffe der Formeln (IV) und (V) im allgemeinen in etwa äquimolaren Mengen eingesetzt. Ein Überschuß der einen oder anderen Komponente ist möglich. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Die Aufarbeitung erfolgt nach üblichen Methoden. Im allgemeinen verfährt man in der Weise, daß man nach beendeter Umsetzung ein organisches Lösungsmittel, z.B. Toluol, zugibt und die organische Phase wie üblich wäscht, trocknet und durch Abdestillieren einengt.

Die neuen Verbindungen fallen zum Teil in Form von Oelen an, die sich zum Teil nicht unzersetzt destillieren lassen, jedoch durch sogenanntes 'Andestillieren', d.h. durch längeres Erhitzen unter vermindertem Druck auf mäßig erhöhte Temperaturen von den letzten flüchtigen Anteilen befreit und auf diese Weise gereinigt werden können.

Zur Charakterisierung der neuen Substanzen dient der Brechungsindex. Soweit die neuen Produkte in fester Form anfallen, können sie durch Umkristallisation gereinigt werden. Zur Charakterisierung dient dann der Schmelzpunkt.

Die bei Verfahren (c) als Ausgangsstoffe einzusetzenden Trifluormethyl-phenoxy-phenyl-silicium-Derivate sind durch die Formel (Ia) definiert. In dieser Formel haben $X^1$, $X^2$, $X^3$, $X^4$, $R^1$, $R^2$, $R^3$, $R^4$, $R^5$, $R^6$, $R^7$, m, n und p diejenigen Bedeutungen, die bereits im Zusammenhang mit der Beschreibung der erfindungsgemäßen Stoffe der Formel (I) für diese Reste bzw. Indices genannt wurden.

Als Beispiele für Verbindungen der Formel (I) seien die in der folgenden Tabelle 5 formelmäßig aufgeführten Stoffe genannt.

Tabelle 5

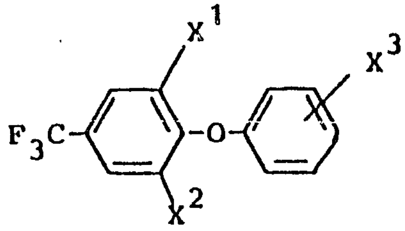 $-(\overset{R^1}{\underset{R^2}{C}})_m-(X^4)_n-(\overset{R^3}{\underset{R^4}{C}})_p-\overset{R^5}{\underset{R^6}{Si}}-R^7$ (Ia)

| $X^1$ | $X^2$ | $X^3$ | $X^4$ | $R^1$ | $R^2$ | $R^3$ | $R^4$ | $R^5$ | $R^6$ | $R^7$ | m | n | p |
|---|---|---|---|---|---|---|---|---|---|---|---|---|---|
| H | Cl | $3-CO_2-$ | | H | H | | | $CH_3$ | $CH_3$ | $-CH_3$ | 1 | 0 | 0 |
| Cl | Cl | $3-CO_2-$ | | H | H | | | $CH_3$ | $CH_3$ | $-CH_3$ | 1 | 0 | 0 |
| H | H | $3-CO_2-$ | | H | H | | | $CH_3$ | $CH_3$ | $-CH_3$ | 1 | 0 | 0 |
| Cl | H | $3-CO_2-$ | | H | H | | | $CH_3$ | $CH_3$ | 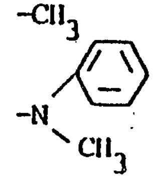 | 1 | 0 | 0 |
| H | H | $3-CO_2-$ | | H | H | | | $CH_3$ | $CH_3$ | $-N(CH_3)_2$ | 1 | 0 | 0 |
| H | Cl | $3-CO_2-$ | | H | H | | | $CH_3$ | $CH_3$ | $-N(CH_3)_2$ | 1 | 0 | 0 |
| Cl | Cl | $3-CO_2-$ | | H | H | | | $CH_3$ | $CH_3$ | $-N(CH_3)_2$ | 1 | 0 | 0 |
| Cl | H | $3-CO_2-$ | | H | H | | | $CH_3$ | $CH_3$ | 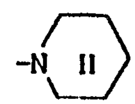 | 1 | 0 | 0 |
| Cl | H | $3-CO_2-$ | | H | H | | | $CH_3$ | $CH_3$ | 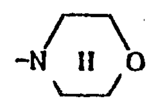 | 1 | 0 | 0 |
| Cl | H | $3-CO_2-$ | | H | H | | | $CH_3$ | $CH_3$ | 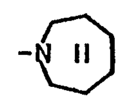 | 1 | 0 | 0 |
| Cl | H | $3-CO_2-$ | | H | H | | | $CH_3$ | $CH_3$ | $-N(CH_2-CH=CH_2)_2$ | 1 | 0 | 0 |

Tabelle 5 (Fortsetzung)

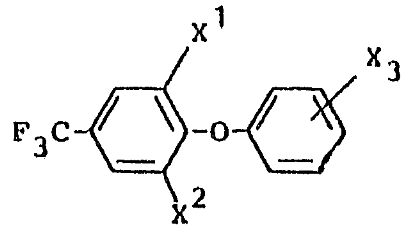 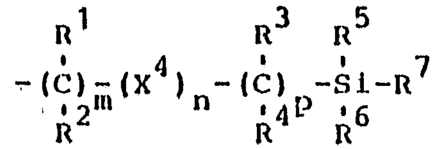 (Ia)

| $X^1$ | $X^2$ | $X^3$ | $X^4$ | $R^1$ | $R^2$ | $R^3$ | $R^4$ | $R^5$ | $R^6$ | $R^7$ | m | n | p |
|---|---|---|---|---|---|---|---|---|---|---|---|---|---|
| Cl | H | $3-CO_2-$ | | H | H | | | $CH_3$ | $CH_3$ | $-OCH_3$ | 1 | 0 | 0 |
| Cl | Cl | $3-CO_2-$ | | H | H | | | $CH_3$ | $CH_3$ | $-OCH_3$ | 1 | 0 | 0 |
| Cl | H | $3-CO_2-$ | | H | H | | | $CH_3$ | $CH_3$ | $-OC_2H_5$ | 1 | 0 | 0 |
| Cl | H | $3-CO_2-$ | | H | H | | | $CH_3$ | $CH_3$ | $-OCH_2CF_3$ | 1 | 0 | 0 |
| Cl | H | $3-CO_2-$ | | H | H | | | $CH_3$ | $CH_3$ | $-OC_3H_7$-iso | 1 | 0 | 0 |
| Cl | H | $3-CO_2-$ | | H | H | | | $CH_3$ | $CH_3$ | $-OC_4H_9$-n | 1 | 0 | 0 |
| Cl | Cl | 3-O | $CO_2$ | $CH_3$ | H | H | H | $CH_3$ | $CH_3$ | $-CH_3$ | 1 | 1 | 1 |
| Cl | H | 3-O | $CO_2$ | $CH_3$ | H | H | H | $CH_3$ | $CH_3$ | $-CH_3$ | 1 | 1 | 1 |
| H | H | 3-O | $CO_2$ | $CH_3$ | H | H | H | $CH_3$ | $CH_3$ | $-CH_3$ | 1 | 1 | 1 |
| H | H | 3-O | $CO_2$ | $CH_3$ | H | H | H | $CH_3$ | $CH_3$ | $-N(CH_3)_2$ | 1 | 1 | 1 |
| H | Cl | 3-O | $CO_2$ | $CH_3$ | H | H | H | $CH_3$ | $CH_3$ | $-N(CH_3)_2$ | 1 | 1 | 1 |
| Cl | Cl | 3-O | $CO_2$ | $CH_3$ | H | H | H | $CH_3$ | $CH_3$ | $-N(CH_3)_2$ | 1 | 1 | 1 |
| Cl | H | 3-O | $CO_2$ | $CH_3$ | H | H | H | $CH_3$ | $CH_3$ | 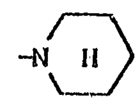 | 1 | 1 | 1 |
| Cl | H | 3-O | $CO_2$ | $CH_3$ | H | H | H | $CH_3$ | $CH_3$ | 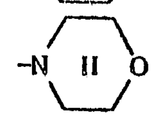 | 1 | 1 | 1 |

Tabelle 5 (Fortsetzung)

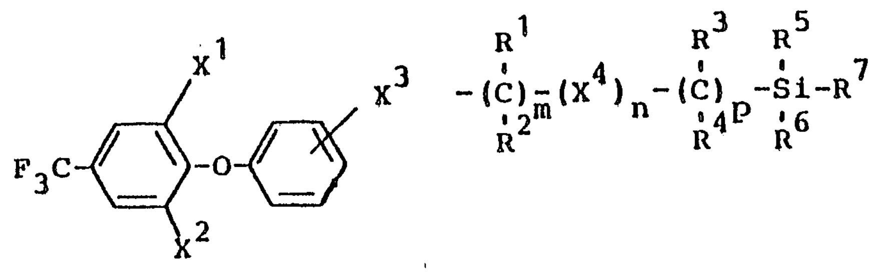 (Ia)

| $X^1$ | $X^2$ | $X^3$ | $X^4$ | $R^1$ | $R^2$ | $R^3$ | $R^4$ | $R^5$ | $R^6$ | $R^7$ | m | n | p |
|---|---|---|---|---|---|---|---|---|---|---|---|---|---|
| Cl | H | 3-O | $CO_2$ | $CH_3$ | H | H | H | $CH_3$ | $CH_3$ | 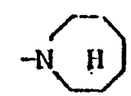 | 1 | 1 | 1 |
| Cl | H | 3-O | $CO_2$ | $CH_3$ | H | H | H | $CH_3$ | $CH_3$ | $-N(CH_2-CH=CH_2)_2$ | 1 | 1 | 1 |
| Cl | H | 3-O | $CO_2$ | $CH_3$ | H | H | H | $CH_3$ | $CH_3$ | 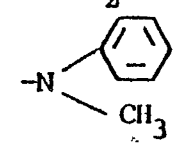 | 1 | 1 | 1 |
| Cl | H | $3-CO_2$ | $CO_2$ | $CH_3$ | H | H | H | $CH_3$ | $CH_3$ | 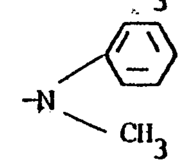 | 1 | 1 | 1 |
| Cl | H | 3-O- | $CO_2$ | $CH_3$ | H | H | H | $CH_3$ | $CH_3$ | $-OCH_3$ | 1 | 1 | 1 |
| Cl | Cl | 3-O- | $CO_2$ | $CH_3$ | H | H | H | $CH_3$ | $CH_3$ | $-OCH_3$ | 1 | 1 | 1 |
| Cl | H | 3-O- | $CO_2$ | $CH_3$ | H | H | H | $CH_3$ | $CH_3$ | $-OCH_2CF_3$ | 1 | 1 | 1 |
| Cl | H | 3-O- | $CO_2$ | $CH_3$ | H | H | H | $CH_3$ | $CH_3$ | $-OC_2H_5$ | 1 | 1 | 1 |
| Cl | H | 3-O- | $CO_2$ | $CH_3$ | H | H | H | $CH_3$ | $CH_3$ | $-OC_3H_7$-iso | 1 | 1 | 1 |
| Cl | H | 3-O- | $CO_2$ | $CH_3$ | H | H | H | $CH_3$ | $CH_3$ | $-OC_4H_9$-n | 1 | 1 | 1 |
| Cl | H | 3-O- | | H | H | | | $CH_3$ | $CH_3$ | $-CH_3$ | 1 | 0 | 0 |
| Cl | Cl | 3-O- | | H | H | | | $CH_3$ | $CH_3$ | $-CH_3$ | 1 | 0 | 0 |
| H | H | 3-O- | | H | H | | | $CH_3$ | $CH_3$ | $-CH_3$ | 1 | 0 | 0 |

Tabelle 5 (Fortsetzung)

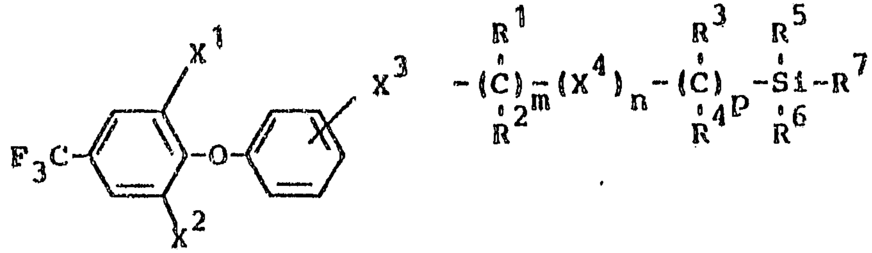 (Ia)

| $X^1$ | $X^2$ | $X^3$ | $X^4$ | $R^1$ | $R^2$ | $R^3$ | $R^4$ | $R^5$ | $R^6$ | $R^7$ | m | n | p |
|---|---|---|---|---|---|---|---|---|---|---|---|---|---|
| H | H | 3-O- | | H | H | | | $CH_3$ | $CH_3$ | $-N(CH_3)_2$ | 1 | 0 | 0 |
| H | Cl | 3-O- | | H | H | | | $CH_3$ | $CH_3$ | $-N(CH_3)_2$ | 1 | 0 | 0 |
| Cl | Cl | 3-O- | | H | H | | | $CH_3$ | $CH_3$ | $-N(CH_3)_2$ | 1 | 0 | 0 |
| Cl | H | 3-O- | | H | H | | | $CH_3$ | $CH_3$ | 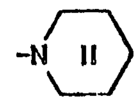 | 1 | 0 | 0 |
| Cl | H | 3-O- | | H | H | | | $CH_3$ | $CH_3$ | 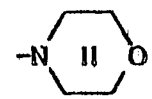 | 1 | 0 | 0 |
| Cl | H | 3-O- | | H | H | | | $CH_3$ | $CH_3$ | 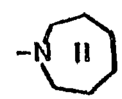 | 1 | 0 | 0 |
| Cl | H | 3-O- | | H | H | | | $CH_3$ | $CH_3$ | $-N(CH_2-CH=CH_2)_2$ | 1 | 0 | 0 |
| Cl | H | 3-O- | | H | H | | | $CH_3$ | $CH_3$ | $-OCH_3$ | 1 | 0 | 0 |
| Cl | H | 3-O- | | H | H | | | $CH_3$ | $CH_3$ | 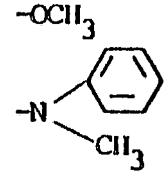 | 1 | 0 | 0 |
| Cl | Cl | 3-O- | | H | H | | | $CH_3$ | $CH_3$ | $-OCH_3$ | 1 | 0 | 0 |

Tabelle 5 (Fortsetzung)

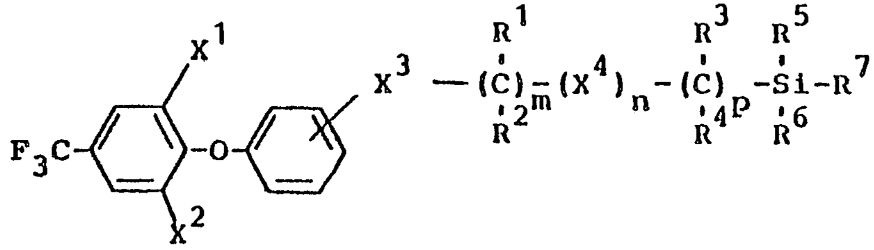

(Ia)

| $X^1$ | $X^2$ | $X^3$ | $X^4$ | $R^1$ | $R^2$ | $R^3$ | $R^4$ | $R^5$ | $R^6$ | $R^7$ | m | n | p |
|---|---|---|---|---|---|---|---|---|---|---|---|---|---|
| Cl | H | 3-O- | | H | H | | | $CH_3$ | $CH_3$ | $-OC_2H_5$ | 1 | 0 | 0 |
| Cl | H | 3-O- | | H | H | | | $CH_3$ | $CH_3$ | $-OCH_2CF_3$ | 1 | 0 | 0 |
| Cl | H | 3-O- | | H | H | | | $CH_3$ | $CH_3$ | $-OC_3H_7$-iso | 1 | 0 | 0 |
| Cl | H | 3-O- | | H | H | | | $CH_3$ | $CH_3$ | $-OC_4H_9$-n | 1 | 0 | 0 |

Zur Nitrierung verwendet man im Falle des erfindungsgemäßen Verfahrens (c) im allgemeinen konzentrierte Salpetersäure.

Die bei dem erfindungsgemäßen Verfahren (c) als Ausgangsstoffe benötigten Trifluormethyl-phenoxy-phenyl-silicium-Derivate der Formel (Ia) sind neu; sie lassen sich jedoch nach den erfindungsgemäßen Verfahren (a) und (b) in einfacher Weise herstellen.

Das erfindungsgemäße Verfahren (c) wird gegebenenfalls unter Verwendung eines Verdünnungsmittels durchgeführt. Als Verdünnungsmittel kommen hierbei vorzugsweise halogenierte Kohlenwasserstoffe, wie z.B. Methylenchlorid, in Betracht.

Das erfindungsgemäße Verfahren (c) wird gegebenenfalls in Gegenwart eines Katalysators durchgeführt. Als Katalysatoren kommen vorzugsweise Protonensäuren, wie z.B. Schwefelsäure oder Essigsäure, in Betracht.

Die Reaktionstemperatur wird bei Verfahren (c) im allgemeinen zwischen -2o und +8o°C, vorzugsweise zwischen 0 und 5o°C gehalten. Verfahren (c) wird im allgemeinen bei Normaldruck durchgeführt.

Zur Durchführung des erfindungsgemäßen Verfahrens (c) setzt man auf 1 Mol der Verbindung mit der Formel (Ia) im allgemeinen 0,9 bis 2 Mol, vorzugsweise 1,0 bis 1,3 Mol an Salpetersäure und gegebenenfalls etwa die gleiche Menge eines Katalysators ein. Die Ausgangskomponenten werden vorzugsweise unter Eiskühlung zusammengegeben und dann gegebenenfalls bei leicht erhöhter Temperatur bis zum Ende der Umsetzung gerührt.

0077962

Die Aufarbeitung erfolgt nach üblichen Methoden. Im allgemeinen verfährt man in der Weise, daß man das Reaktionsgemisch nach beendeter Umsetzung in Eiswasser eingießt, absaugt und das anfallende Produkt gegebenenfalls durch Umkristallisieren reinigt.

Die bei dem erfindungsgemäßen Verfahren (d) als Ausgangsstoffe benötigten Trifluormethyl-phenoxyphenylsilicium-Derivate sind durch die Formel (Ib) definiert. In dieser Formel haben $X^1$, $X^2$, $X^3$, $X^4$, Y, $R^1$, $R^2$, $R^3$, $R^4$, $R^5$, $R^6$, $R^8$, $R^9$, m, n und p diejenigen Bedeutungen, die bereits im Zusammenhang mit der Beschreibung der erfindungsgemäßen Stoffe der Formel (I) für diese Reste bzw. Indices genannt wurden.

Als Beispiele für die Verbindungen der Formel (Ib) seien im einzelnen genannt:

<u>Tabelle 6:</u>

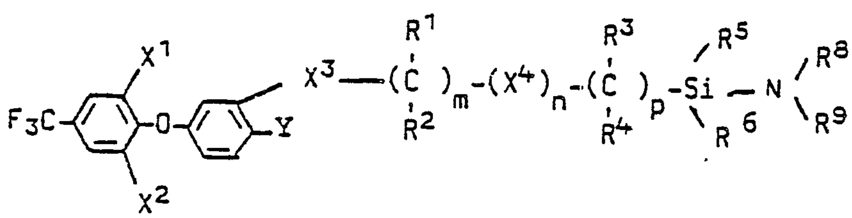

(Ib)

Tabelle 6:

| $X^1$ | $X^2$ | $X^3$ | $X^4$ | Y | $R^1$ | $R^2$ | $R^3$ | $R^4$ | $R^5$ | $R^6$ | $R^8$ | $R^9$ | m | n | p |
|---|---|---|---|---|---|---|---|---|---|---|---|---|---|---|---|
| H | H | $CO_2$ | | $NO_2$ | | | H | H | $CH_3$ | $CH_3$ | $CH_3$ | $CH_3$ | 0 | 0 | 1 |
| H | Cl | $CO_2$ | | $NO_2$ | | | H | H | $CH_3$ | $CH_3$ | $CH_3$ | $CH_3$ | 0 | 0 | 1 |
| Cl | H | $CO_2$ | | $NO_2$ | | | H | H | $CH_3$ | $CH_3$ | $CH_3$ | 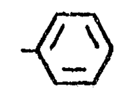 | 0 | 0 | 1 |
| Cl | Cl | $CO_2$ | | $NO_2$ | | | H | H | $CH_3$ | $CH_3$ | $CH_3$ | $CH_3$ | 0 | 0 | 1 |
| Cl | H | $CO_2$ | | $NO_2$ | | | H | H | $CH_3$ | $CH_3$ | $-(CH_2)_5-$ | | 0 | 0 | 1 |
| Cl | H | $CO_2$ | | $NO_2$ | | | H | H | $CH_3$ | $CH_3$ | $-(CH_2)_2-O-(CH_2)_2-$ | | 0 | 0 | 1 |
| Cl | H | $CO_2$ | | $NO_2$ | | | H | H | $CH_3$ | $CH_3$ | $-(CH_2)_6-$ | | 0 | 0 | 1 |
| Cl | H | $CO_2$ | | $NO_2$ | | | H | H | $CH_3$ | $CH_3$ | $CH-CH=CH_2$ | $CH-CH=CH_2$ | 0 | 0 | 1 |
| Cl | H | O | $CO_2$ | $NO_2$ | H | $CH_3$ | H | H | $CH_3$ | $CH_3$ | $CH_3$ | 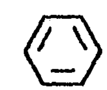 | 1 | 1 | 1 |
| H | H | O | $CO_2$ | $NO_2$ | H | $CH_3$ | H | H | $CH_3$ | $CH_3$ | $CH_3$ | $CH_3$ | 1 | 1 | 1 |
| H | Cl | O | $CO_2$ | $NO_2$ | H | $CH_3$ | H | H | $CH_3$ | $CH_3$ | $CH_3$ | $CH_3$ | 1 | 1 | 1 |
| Cl | Cl | O | $CO_2$ | $NO_2$ | H | $CH_3$ | H | H | $CH_3$ | $CH_3$ | $CH_3$ | $CH_3$ | 1 | 1 | 1 |
| Cl | H | O | $CO_2$ | $NO_2$ | H | $CH_3$ | H | H | $CH_3$ | $CH_3$ | $-(CH_2)_5$ | | 1 | 1 | 1 |
| Cl | H | O | $CO_2$ | $NO_2$ | H | $CH_3$ | H | H | $CH_3$ | $CH_3$ | $-(CH_2)_2-O-(CH_2)_2-$ | | 1 | 1 | 1 |
| Cl | H | O | $CO_2$ | $NO_2$ | H | $CH_3$ | H | H | $CH_3$ | $CH_3$ | $-(CH_2)_6-$ | | 1 | 1 | 1 |
| Cl | H | O | $CO_2$ | $NO_2$ | H | $CH_3$ | H | H | $CH_3$ | $CH_3$ | $CH_2-CH=CH_2$ | $CH-CH=CH_2$ | 1 | 1 | 1 |
| H | H | O | | $NO_2$ | | | H | H | $CH_3$ | $CH_3$ | $CH_3$ | $CH_3$ | 0 | 0 | 1 |

Tabelle 6: (Fortsetzung)

| $X^1$ | $X^2$ | $X^3$ | $X^4$ | Y | $R^1$ | $R^2$ | $R^3$ | $R^4$ | $R^5$ | $R^6$ | $R^8$ | $R^9$ | m | n | p |
|---|---|---|---|---|---|---|---|---|---|---|---|---|---|---|---|
| H | Cl | O | | $NO_2$ | | | H | H | $CH_3$ | $CH_3$ | $CH_3$ | $CH_3$ | 0 | 0 | 1 |
| Cl | Cl | O | | $NO_2$ | | | H | H | $CH_3$ | $CH_3$ | $CH_3$ | $CH_3$ | 0 | 0 | 1 |
| Cl | H | O | | $NO_2$ | | | H | H | $CH_3$ | $CH_3$ | $-(CH_2)_5-$ | | 0 | 0 | 1 |
| Cl | H | O | | $NO_2$ | | | H | H | $CH_3$ | $CH_3$ | $-(CH_2)_2-O-(CH_2)_2-$ | | 0 | 0 | 1 |
| Cl | H | O | | $NO_2$ | | | H | H | $CH_3$ | $CH_3$ | $-(CH_2)_6-$ | | 0 | 0 | 1 |
| Cl | H | O | | $NO_2$ | | | H | H | $CH_3$ | $CH_3$ | $CH_2-CH=CH_2$ | $CH_2-CH=CH_2$ | 0 | 0 | 1 |
| Cl | H | O | | $NO_2$ | | | H | N | $CH_3$ | $CH_3$ | $CH_3$ | 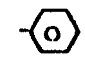 | 0 | 0 | 1 |
| Cl | H | $CO_2$ | $CO_2$ | $NO_2$ | H | $CH_3$ | H | H | $CH_3$ | $CH_3$ | $CH_3$ | 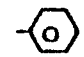 | 1 | 1 | 1 |
| H | H | $CO_2$ | $CO_2$ | $NO_2$ | H | $CH_3$ | H | H | $CH_3$ | $CH_3$ | $CH_3$ | $CH_3$ | 1 | 1 | 1 |
| H | Cl | $CO_2$ | $CO_2$ | $NO_2$ | H | $CH_3$ | H | H | $CH_3$ | $CH_3$ | $CH_3$ | $CH_3$ | 1 | 1 | 1 |
| Cl | Cl | $CO_2$ | $CO_2$ | $NO_2$ | H | $CH_3$ | H | H | $CH_3$ | $CH_3$ | $CH_3$ | $CH_3$ | 1 | 1 | 1 |
| Cl | H | $CO_2$ | $CO_2$ | $NO_2$ | H | $CH_3$ | H | H | $CH_3$ | $CH_3$ | $-(CH_2)_5-$ | | 1 | 1 | 1 |
| Cl | H | $CO_2$ | $CO_2$ | $NO_2$ | H | $CH_3$ | H | H | $CH_3$ | $CH_3$ | $-(CH_2)_2-O-(CH_2)_2-$ | | 1 | 1 | 1 |
| Cl | H | $CO_2$ | $CO_2$ | $NO_2$ | H | $CH_3$ | H | H | $CH_3$ | $CH_3$ | $-(CH_2)_6-$ | | 1 | 1 | 1 |
| Cl | H | $CO_2$ | $CO_2$ | $NO_2$ | H | $CH_3$ | H | H | $CH_3$ | $CH_3$ | $CH_2-CH=CH_2$ | $CH_2-CH=CH_2$ | 1 | 1 | 1 |

Die Verbindungen der Formel (Ib) sind neu; sie lassen sich jedoch nach den erfindungsgemäßen Verfahren (a), (b) und (c) in einfacher Weise herstellen.

Die außerdem bei dem Verfahren (d) als Ausgangsstoffe einzusetzenden Hydroxy-Verbindungen sind durch die Formel (VI) definiert. In dieser Formel steht $R^{10}$ für Wasserstoff, für gegebenenfalls durch Fluor, Chlor, Brom und/oder Iod substituiertes geradkettiges oder verzweigtes $C_1$-$C_5$-Alkyl, $C_2$-$C_5$-Alkenyl und $C_2$-$C_5$-Alkinyl.

Als Beispiele für die Verbindungen der Formel (VI) seien im einzelnen genannt:

Wasser, Methanol, Ethanol, n-Propanol, iso-Propanol, 1-Butanol, 2-Butanol, 2-Methyl-2-propanol und 2-Methyl-3-propanol.

Das erfindungsgemäße Verfahren (d) wird gegebenenfalls unter Verwendung eines Verdünnungsmittels durchgeführt. Als Verdünnungsmittel werden hierbei vorzugsweise die Verbindungen der Formel (VI) verwendet.

Die Reaktionstemperatur wird bei Verfahren (d) im allgemeinen zwischen 0 und 150°C gehalten; vorzugsweise wird zwischen 0°C und 120°C gearbeitet. Verfahren (d) wird im allgemeinen bei Normaldruck durchgeführt.

Zur Durchführung des erfindungsgemäßen Verfahrens

(d) setzt man auf 1 Mol der Verbindung mit der Formel (Ib) bis zu 10 Mol der Verbindung mit der Formel (VI) ein. Die Aufarbeitung erfolgt nach üblichen Methoden.

Die erfindungsgemäßen Wirkstoffe beeinflussen das Pflanzenwachstum und können deshalb als Defoliants, Desiccants, Krautabtötungsmittel, Keimhemmungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

<u>Dikotyle Unkräuter der Gattungen</u>: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

<u>Dicotyle Kulturen der Gattungen</u>: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

<u>Monokotyle Unkräuter der Gattungen</u>: Echinochloa, Setaria, Panicum, Digitaria, Phleum, Poa, Festuca, Eleusine, Brachiaria, Lolium, Bromus, Avena, Cyperus, Sorghum,

Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen z.B. Forst-, Ziergehölz-, Obst-, Wein-, Citrus-, Nuss-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäßen Wirkstoffe sind besonders gut zur selektiven Unkrautbekämpfung in verschiedenen wichtigen Kulturen, wie zum Beispiel Getreide und Sojabohnen, geeignet.

Außerdem besitzen die erfindungsgemäßen Wirkstoffe eine sehr gute pflanzenwachstumsregulierende Wirksamkeit. Sie eignen sich besonders gut zur Wuchshemmung, sowie zur Entlaubung und Austrocknung der Blätter bei Baumwolle.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur- und synthetische Stoffe, Feinstverkapselungen in polymeren Stoffen. Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silicate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen

Mehlen sowie Granulate aus organischem Material wie Sägemehl, Kokosnußschalen, Maiskolben und Tabakstengeln; als Emulgier- und/oder schaumerzeugende Mittel kommen infrage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden oder Pflanzenwachstumsregulatoren zur Unkrautbekämpfung bzw. als Pflanzenwuchsregulatoren Verwendung finden, wobei Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich.

Die Wirkstoffe können als solche, in Form ihrer Formulierungen oder der daraus durch weiteres Verdünnen bereiteten Anwendungsformen, wie gebrauchsfertige Lösungen, Suspensionen, Eumulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können bei einer Anwendung als Herbizide sowohl vor als auch nach dem Auflaufen der Pflanzen appliziert werden. Die Anwendung wird vorzugsweise nach dem Auflaufen der Pflanzen, also im post-emergence-Verfahren, vorgenommen. Sie können auch vor der Saat in den Boden eingearbeitet werden.

Die angewandte Wirkstoffmenge kann in einem größeren Bereich schwanken. Sie hängt im wesentlichen ab von der Art des gewünschten Effektes ab. Im allgemeinen liegen die Aufwandmengen zwischen 0,01 und 50 kg Wirkstoff pro Hektar Bodenfläche, vorzugsweise zwischen o,o5 und lo kg pro ha.

Die Herstellung und die Verwendung der erfindungsgemäßen Wirkstoffe geht aus den nachfolgenden Beispielen hervor.

0077962

Herstellungsbeispiele

Beispiel 1

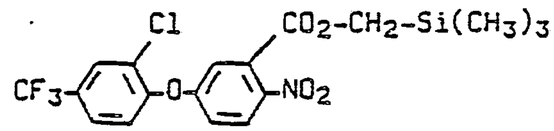

18,1 g (0,05 Mol) 5-(2-Chlor-4-trifluormethyl-phenoxy)-2-nitro-benzoesäure werden in 100 ml Dimethylsulfoxid gelöst. Bei 20°C werden 9,8 g Diazoabicycloundecan unter Kühlung hinzugegeben. Es wird eine halbe Stunde nachgerührt. Anschließend werden bei 20°C 7,4 g (0,06 Mol) Chlormethyl-trimethylsilan zugetropft und es wird 20 Stunden auf 100°C erhitzt. Das Reaktionsgemisch wird danach eingeengt, und der Rückstand wird in Toluol aufgenommen. Die organische Phase wird nacheinander mit verdünnter Salzsäure, wäßriger Natronlauge und Wasser gewaschen, dann getrocknet und eingedampft. Der Rückstand wird in Ligroin gelöst, mit Aktiv-Kohle verrührt, über Kieselgur abgesaugt und anschließend eingeengt. Man erhält 20 g (89 % der Theorie) 5-(2-Chlor-4-trifluormethyl-phenoxy)-2-nitro-benzoesäure-(trimethyl-silyl)-methylester als dickflüssiges Öl.

Beispiel 2

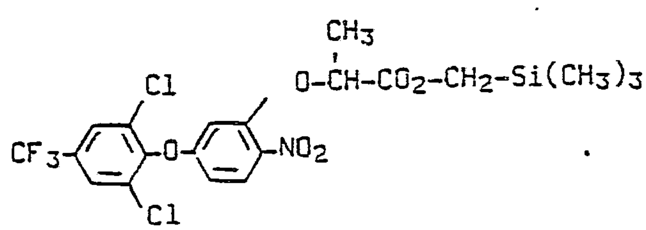

40 g (0,09 Mol) 2-(5-(2,6-Dichlor-4-trifluormethyl-phenoxy)-2-nitro-phenoxy)-propionsäure und 100 g Aceton werden unter Kühlung bei 20°C tropfenweise versetzt mit 16,8 g (0,11 Mol) Diazabicycloundecen. Anschließend werden bei 20°C 13,8 g (0,11 Mol) Chlormethyl-trimethylsilan zugetropft. Das Reaktionsgemisch wird 20 Stunden bei 50°C gerührt, anschließend eingeengt und mit 300 ml Wasser versetzt. Der pH-Wert wird durch Zugabe von Eisessig auf 5 eingestellt, das Gemisch wird mit Toluol extrahiert, und die organische Phase wird eingeengt. Man erhält 39,5 g (83 % der Theorie) 2-(5-(2,6-Dichlor-4-trifluormethyl-phenoxy)-2-nitro-phenoxy)-propionsäure-(trimethylsilyl)-methylester als Öl vom Brechungsindex $n_D^{20}$: 1,5325.

Beispiel 3

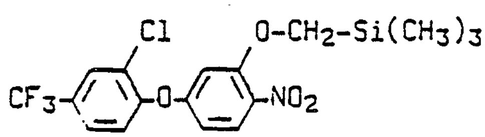

33,3 g (0,1 Mol) 5-(2-Chlor-4-trifluormethyl-phenoxy)-2-nitrophenol und 150 ml Dimethylsulfoxid werden unter Kühlung bei 20°C tropfenweise mit 18,7 g Diazabicycloundecen versetzt. 15,1 g (0,123 Mol) Chlormethyl-trimethylsilan werden hinzugetropft, und das Reaktionsgemisch wird 6 Stunden auf 100°C erhitzt. Anschließend wird das Reaktionsgemisch eingeengt. Der verbleibende Rückstand wird in Toluol aufgenommen. Die organische Phase wird nacheinander mit verdünnter Salzsäure, wäßriger Natronlauge und Wasser gewaschen, getrocknet und eingeengt. Man erhält 22,2 g (53 % der Theorie) 5-(2-Chlor-trifluormethyl-phenoxy-2-nitro-phenoxy)-methyl-trimethylsilan als gelbes Öl vom Brechnungsindex $n_D^{20}$: 1,5368.

0077962

Analog Beispiel 1, 2 bzw. 3 werden die in der nachstehenden Tabelle 7 aufgeführten Verbindungen der Formel (I) hergestellt:

Le A 21 107

Tabelle 7

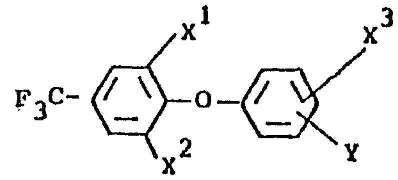

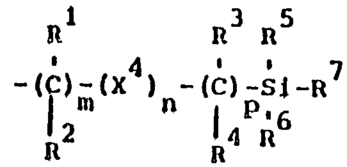

| Beispiel-Nr. | $X^1$ | $X^2$ | $X^3$ | $X^4$ | Y | $R^1$ | $R^2$ | $R^3$ | $R^4$ | $R^5$ | $R^6$ | $R^7$ | m | n | p | Schmelz-punkt [°C] |
|---|---|---|---|---|---|---|---|---|---|---|---|---|---|---|---|---|
| 4 | Cl | Cl | 3-$CO_2$- | | 4-$NO_2$ | H | H | | | $CH_3$ | $CH_3$ | $CH_3$ | 1 | 0 | 0 | 61 |
| 5 | Cl | Cl | 3-O- | | 4-$NO_2$ | H | H | | | $CH_3$ | $CH_3$ | $CH_3$ | 1 | 0 | 0 | 78-79 |

In den folgenden Verwendungsbeispielen wird die nachstehend angegebene Verbindung als Vergleichssubstanz eingesetzt:

(A) = 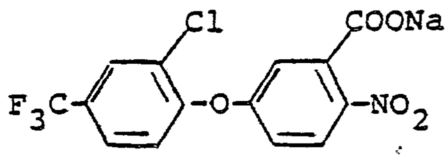

5-(2-Chlor-4-trifluormethyl-phenoxy)-2-nitro-benzoesäure-Natriumsalz
(bekannt aus DE-OS 2 311 638 bzw. US-PS 4 063 929).

Beispiel A

Post-emergence-Test

Lösungsmittel: 5 Gewichtsteile Aceton
Emulgator: 1 Gewichtsteil Alkylarylpolyglycoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschte Wirkstoffmenge pro Flächeneinheit ausgebracht wird. Die Konzentration der Spritzbrühe wird so gewählt, daß in 2000 l Wasser /ha die jeweils gewünschte Wirkstoffmenge ausgebracht wird. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

In diesem Test zeigen die erfindungsgemäßen Wirkstoffe (1), (2), (3) und (4) eine bessere selektive herbizide Wirksamkeit als die Vergleichssubstanz (A).

Beispiel 8

Entlaubung und Austrocknung der Blätter bei Baumwolle

Lösungsmittel: 3o Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Folgeblattes angezogen. In diesem Stadium werden die Pflanzen tropfnaß mit den Wirkstoffzubereitungen besprüht. Nach 1 Woche werden der Blattfall und das Austrocknen der Blätter im Vergleich zu den Kontrollpflanzen bonitiert. Es bedeuten:

0 kein Austrocknen der Blätter, kein Blattfall
\+ leichtes Austrocknen der Blätter, geringer Blattfall
++ starkes Austrocknen der Blätter, starker Blattfall
+++ sehr starkes Austrocknen der Blätter, sehr starker Blattfall

In diesem Test zeigen die erfindungsgemäßen Wirkstoffe (1), (2), (3) und (4) eine starke bis sehr starke Wirksamkeit.

Patentansprüche

1) Trifluormethyl-phenoxy-phenyl-silicium-Derivate der Formel

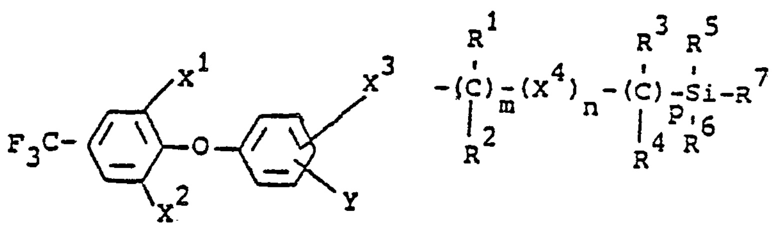

(I)

in welcher

$X^1$ und $X^2$ unabhängig voneinander für Wasserstoff, Fluor, Chlor, Brom oder Iod stehen,

Y für Wasserstoff, Halogen, Cyano oder Nitro steht,

n für die Zahlen 0 oder 1 steht,

m für die Zahlen 0, 1, 2 oder 3 steht,

p für die Zahlen 0, 1, 2 oder 3 steht,

$X^3$ und $X^4$ unabhängig voneinander für Sauerstoff oder die -CO-O-Gruppe stehen,

$R^1$, $R^2$, $R^3$ und $R^4$ unabhängig voneinander für Wasserstoff oder $C_1$-$C_5$-Alkyl stehen,

$R^5$ und $R^6$ unabhängig voneinander für $C_1$-$C_5$-Alkyl stehen, und

$R^7$ für $C_1$-$C_5$-Alkyl, Hydroxy, Chlor, Brom, Iod, für gegebenenfalls durch Fluor, Chlor, Brom, Iod, $C_1$-$C_5$-Alkoxy und/oder $C_1$-$C_5$-Alkylthio substituiertes geradkettiges oder verzweigtes $C_1$-$C_5$-Alkoxy, $C_2$-$C_5$-Alkenoxy, $C_2$-$C_5$-Alkinoxy, $C_1$-$C_5$-Alkylthio, $C_2$-$C_5$-Alkenyl-thio, $C_2$-$C_5$-Alkinylthio oder für den Rest

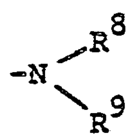 steht, worin

$R^8$ und $R^9$ unabhängig voneinander für gegebenenfalls durch Fluor, Brom und/oder Iod substituiertes Phenyl, geradkettiges oder verzweigtes $C_1$-$C_5$-Alkyl, $C_2$-$C_5$-Alkenyl oder $C_2$-$C_5$-Alkinyl stehen,

oder worin

$R^8$ und $R^9$ zusammen mit dem Stickstoffatom an das sie gebunden sind, für gegebenenfalls durch Methyl und/oder Ethyl substituiertes Pyrrolidyl, für gegebenenfalls durch Methyl substituiertes Morpholinyl, für Azacycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethyl-piperidyl stehen.

2) Trifluormethyl-phenoxy-phenyl-silicium-Derivate der Formel (I), in denen

$X^1$ und $X^2$ unabhängig voneinander für Wasserstoff oder Chlor stehen,

Y für Wasserstoff, Chlor, Cyano oder Nitro steht,

m für die Zahlen 0, 1, 2 oder 3 steht,

n für die Zahlen 0 oder 1 steht,

p für die Zahlen 0, 1, 2 oder 3 steht,

$X^3$ für Sauerstoff oder die -CO-O-Gruppe steht,

$X^4$ für Sauerstoff oder die -CO-Gruppe steht,

$R^1$, $R^2$, $R^3$ und $R^4$ unabhängig voneinander für Wasserstoff, Methyl oder Ethyl stehen,

$R^5$ und $R^6$ unabhängig voneinander für Methyl, Ethyl, n- und iso-Propyl, n-, iso-, sec.- und tert.-Butyl stehen, und

$R^7$ für Methyl, Ethyl, n- und iso-Propyl, n-, iso-, sec.- und tert.-Butyl, für Hydroxy,

Chlor, gegebenenfalls durch Fluor, Chlor, Methoxy, Ethoxy, Methylthio und/oder Ethylthio substituiertes Methoxy, Ethoxy, n- und iso-Propoxy, n-, iso-, sec.- und tert.-Butoxy, Methylthio, Ethylthio, Propenoxy, Propinoxy, Propenylthio, Propinylthio oder für den Rest

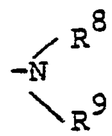 steht, worin

$R^8$ und $R^9$ unabhängig voneinander für gegebenenfalls durch Fluor und/oder Chlor substituiertes Phenyl, Methyl, Ethyl, n- und iso-Propyl, n-, iso-, sec.- und tert.-Butyl, 2-Propenyl, 2-Butenyl, 2-Propinyl oder 2-Butinyl stehen,

oder worin

$R^8$ und $R^9$ zusammen mit dem Stickstoffatom, an das sie gebunden sind, für gegebenenfalls durch Methyl und/oder Ethyl substituiertes Pyrrolidyl, für gegebenenfalls durch Methyl substituiertes Morpholinyl, für Azacycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethyl-piperidyl stehen.

3) Verfahren zur Herstellung von Trifluormethyl-phenoxy-phenyl-silicium-Derivaten der Formel

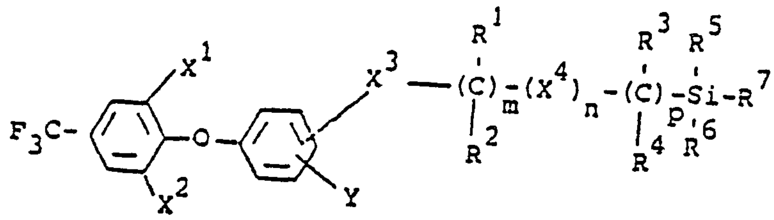

(I)

in welcher

$X^1$ und $X^2$ unabhängig voneinander für Wasserstoff, Fluor, Chlor, Brom oder Iod stehen,

Y für Wasserstoff, Halogen, Cyano oder Nitro steht,

n für die Zahlen 0 oder 1 steht,

m für die Zahlen 0, 1, 2 oder 3 steht,

p für die Zahlen 0, 1, 2 oder 3 steht,

$X^3$ und $X^4$ unabhängig voneinander für Sauerstoff oder die -CO-O-Gruppe stehen,

$R^1$, $R^2$, $R^3$ und $R^4$ unabhängig voneinander für Wasserstoff oder $C_1$-$C_5$-Alkyl stehen,

$R^5$ und $R^6$ unabhängig voneinander für $C_1$-$C_5$-Alkyl stehen und

$R^7$ für $C_1$-$C_5$-Alkyl, Hydroxy, Chlor, Brom, Iod, für gegebenenfalls durch Fluor, Chlor, Brom, Iod, $C_1$-$C_5$-Alkoxy und/oder $C_1$-$C_5$-

Alkylthio substituiertes geradkettiges oder verzweigtes $C_1$-$C_5$-Alkoxy, $C_2$-$C_5$-Alkenoxy, $C_2$-$C_5$-Alkinoxy, $C_1$-$C_5$-Alkylthio, $C_2$-$C_5$-Alkenyl-thio, $C_2$-$C_5$-Alkinylthio oder für den Rest

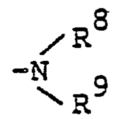 steht, worin

$R^8$ und $R^9$ unabhängig voneinander für gegebenenfalls durch Fluor, Chlor, Brom und/oder Iod substituiertes Phenyl, geradkettiges oder verzweigtes $C_1$-$C_5$-Alkyl, $C_2$-$C_5$-Alkenyl oder $C_2$-$C_5$-Alkinyl stehen,

oder worin

$R^8$ und $R^9$ zusammen mit dem Stickstoffatom an das sie gebunden sind, für gegebenenfalls durch Methyl und/oder Ethyl substituiertes Pyrrolidyl, für gegebenenfalls durch Methyl substituiertes Morpholinyl, für Azacycloheptyl, für Piperidyl, für 3-Methyl-, 4-Methyl-, 2-Ethyl-, 4-Ethyl-, 2,3-Dimethyl-, 2,4-Dimethyl-, 2,5-Dimethyl- oder 3,5-Dimethyl-piperidyl stehen,

dadurch gekennzeichnet, daß man

a) Diphenylether der Formel

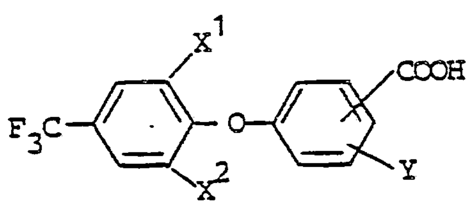

(II)

in welcher
$X^1$, $X^2$ und Y die oben angegebene Bedeutung haben,

mit Verbindungen der Formel

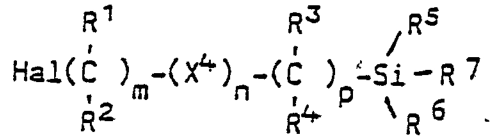

(III)

in welcher
$X^4$, $R^1$, $R^2$, $R^3$, $R^4$, $R^5$, $R^6$, $R^7$, m, n und p die oben angegebene Bedeutung haben und
Hal für Chlor oder Brom steht,

gegebenenfalls in Gegenwart eines Säureakzeptors und gegebenenfalls in Gegenwart eines Verdünnungsmittels umsetzt,

oder

b) Diphenylether-Derivate der Formel

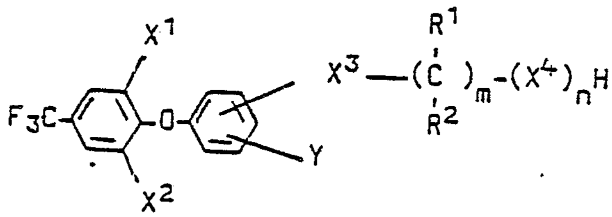

(IV)

in welcher
$X^1$, $X^2$, $X^3$, $X^4$, Y, $R^1$, $R^2$, m und n die oben angegebene Bedeutung haben,

mit Silicium-Derivaten der Formel

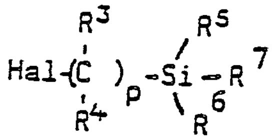

(V)

in welcher
$R^3$, $R^4$, $R^5$, $R^6$, $R^7$, p und Hal die oben angegebene Bedeutung haben, gegebenenfalls in Gegenwart eines Säureakzeptors und gegebenenfalls in Gegenwart eines Verdünnungsmittels umsetzt,

oder

c) Trifluormethyl-phenoxy-phenyl-silicium-Derivate der Formel

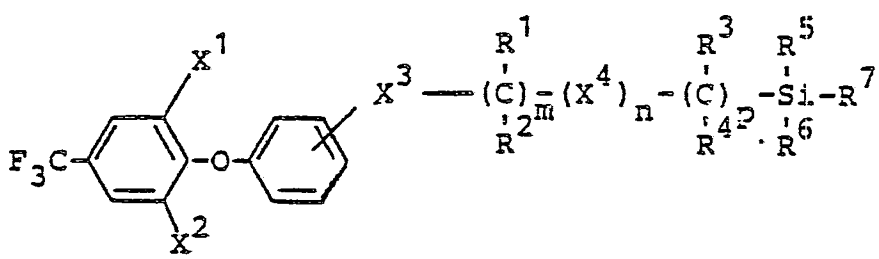

(Ia)

in welcher
$X^1$, $X^2$, $X^3$, $X^4$, $R^1$, $R^2$, $R^3$, $R^4$, $R^5$, $R^6$, $R^7$, m, p und n die oben angegebene Bedeutung haben,

mit Salpetersäure, gegebenenfalls in Gegenwart eines Katalysators sowie gegebenenfalls in Gegenwart eines Verdünnungsmittels, umsetzt,

oder

d) Trifluormethyl-phenoxy-phenyl-silicium-Derivate der Formel

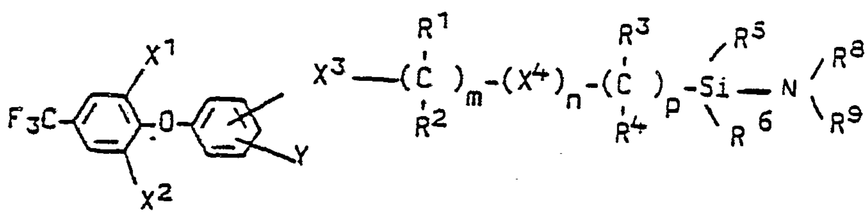

(Ib)

in welcher
$X^1$, $X^2$, $X^3$, $X^4$, Y, $R^1$, $R^2$, $R^3$, $R^4$, $R^5$, $R^6$, $R^8$, $R^9$, m, n und p die oben angegebene Bedeutung haben,

mit Hydroxy-Verbindungen der Formel

$$HO-R^{10} \qquad (VI)$$

in welcher
$R^{10}$ für Wasserstoff, für gegebenenfalls durch Fluor, Chlor, Brom und/oder Iod substituiertes geradkettiges oder verzweigtes $C_1$-$C_5$-Alkyl, $C_2$-$C_5$-Alkenyl oder $C_2$-$C_5$-Alkinyl steht,

gegebenenfalls in Gegenwart eines Verdünnungsmittels umsetzt.

4) Herbizide und pflanzenwuchsregulierende Mittel, gekennzeichnet, durch einen Gehalt an mindestens einem Trifluormethyl-phenoxy-phenyl-silicium-Derivat der Formel (I).

5) Verfahren zur Bekämpfung von Unkräutern bzw. zur Regulierung des Pflanzenwachstums, dadurch gekennzeichnet, daß man Trifluormethyl-phenoxy-phenyl-silicium-Derivate der Formel (I) auf die Pflanzen und/oder deren Lebensraum ausbringt.

6) Verwendung von Trifluormethyl-phenoxy-phenyl-silicium-Derivaten der Formel (I) zur Bekämpfung von Unkräutern bzw. zur Regulierung des Pflanzenwachstums.

7) Verfahren zur Herstellung von herbiziden bzw. pflanzenwuchsregulierenden Mitteln, dadurch gekennzeichnet, daß man Trifluor-methyl-phenoxy-phenyl-silicium-Derivate der Formel (I) mit Streckmitteln und/oder oberflächenaktiven Stoffen vermischt.

Europäisches Patentamt

# EUROPÄISCHER RECHERCHENBERICHT

0077962
Nummer der Anmeldung

EP 82 10 9384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 215 629 (DYNAMIT NOBEL) * Seite 18, Anspruch 1 * | 1 | C 07 F 7/08<br>C 07 F 7/18<br>C 07 F 7/10<br>C 07 F 7/12<br>A 01 N 55/00 |
| A | US-A-3 770 790 (HAROLD A. CLARK) * Spalte 3, Zeilen 5-12 * | 1 | |
| | | | **RECHERCHIERTE SACHGEBIETE (Int. Cl. 3)** |
| | | | C 07 F 7/00 |

Der vorliegende Recherchenbericht wurde für alle Patentansprüche erstellt.

| Recherchenort | Abschlußdatum der Recherche | Prüfer |
|---|---|---|
| DEN HAAG | 02-02-1983 | SUTER M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03 82